# EUROPÄISCHE PATENTSCHRIFT

(11) **EP 0 676 535 B1**
(45) Veröffentlichungstag und Bekanntmachung des Hinweises auf die Patenterteilung: **20.05.1998**
(21) Anmeldenummer: 95810244.4
(22) Anmeldetag: 10.04.1995
(51) Int. Cl.: F01N 3/28

(54) **Katalysator für die katalytische Behandlung von Abgas**
Catalytic converter for the catalytic treatment of exhaust gases
Catalyseur pour le traitement catalytique de gaz d'échappement

(30) Priorität: 11.04.1994 CH 1065/94
(43) Veröffentlichungstag der Anmeldung: 11.10.1995
(73) Patentinhaber: SCAMBIA INDUSTRIAL DEVELOPMENTS AKTIENGESELLSCHAFT, FL-9494 Schaan (LI)
(72) Erfinder: Steenackers, Pieter D., Dr., B-3030 Heverlee (BE); Petitjean, Frédéric, P.D.F., B-4020 Jupille-sur-Meuse (BE)
(74) Vertreter: Eder, Carl E.

(56) Entgegenhaltungen:
- WO-A-94/12777
- DE-A- 4 311 513
- FR-A- 2 075 691
- FR-A- 2 617 903
- GB-A- 2 062 487
- JP-A-56 089 836
- ENGINEERING, Bd. 233, Nr. 10, November 1993 LONDON, GB, Seiten 7-9, XP 000422152 'Catalytic converters'

## Beschreibung

Die Erfindung betrifft einen Katalysator für die katalytische Behandlung von Abgas.

Der Katalysator ist insbesondere vorgesehen, um von einem Benzin-Verbrennungsmotor eines Motorfahrzeuges, beispielsweise eines Automobils, oder eventuell von einem anderen Verbrennungsmotor erzeugtes Abgas durch eine katalytische Behandlung zu reinigen und/oder zu entgiften, d. h. von Schadstoffen zu befreien, indem diese durch eine chemische Reaktion umgewandelt werden.

Ein aus der JP 56 089 836 bekannter Katalysator besitzt ein Gehäuse, das ausschliesslich aus einem Rohr mit einem im Querschnitt rechteckförmigen Mantel besteht. Das Rohr enthält Katalysatormittel mit zwei V-förmig angeordneten Katalysator-Körpern, deren eine Enden durch Eckstücke mit zwei einander gegenüberstehenden Rohrwänden verbunden sind. Zwischen den einander zugewandten Innenflächen der beiden Katalysator-Körpern ist ein innerer Hohlraum vorhanden. Zwischen den einander abgewandten Aussenflächen der beiden Katalysator-Körper und den diesen gegenüberstehenden Rohrwänden sind äussere Hohlräume vorhanden. Die Katalysator-Körper haben von den Innenflächen zu den Aussenflächen verlaufende Durchgänge für das Abgas.

Das als Gehäuse dienende Rohr ragt offenbar stromaufwärts und stromabwärts weit von den Katalysatormitteln weg, ist relativ breit und kann in gewissen Richtungen schlecht gebogen werden. Es ist daher aus Platzgründen schwierig, ein derartiges Rohr in ein Automobil einzubauen. Zudem sind die Katalysator-Körper offenbar aus Keramiksubstraten gebildet. Die Durchgänge von aus der Praxis bekannten Keramiksubstraten haben jedoch relativ grosse Querschnittsabmessungen, weil die Begrenzungsflächen der Durchgänge sonst nicht überall mit katalytisch aktivem Material beschichtet werden können. Grosse Querschnittsabmessungen der Durchgänge verkleinern den Wirkungsgrad der Katalysatormittel. Dies hat wiederum zur Folge, dass die Katalysatormittel zur Erzielung einer ausreichenden katalytischen Reinigung gross und schwer ausgebildet werden müssen und für ihre Herstellung viel teures Edelmetall benötigen. Bei der Benützung dieses bekannten Katalysators, strömt das heisse Abgas vor dem Einströmen in den inneren Hohlraum durch das im Querschnitt rechteckförmige Rohr und gibt wegen der grossen Oberfläche des letzteren viel Wärme an die Umgebung ab. Dies vergrössert die Zeit, die bei einem Kalt-Start des Motors benötigt wird, um der Katalysatormittel auf die für eine effiziente Abgasreinigung erforderliche Betriebstemperatur aufzuheizen. Des weiteren wird das Abgas unmittelbar vor dem Einströmen in den zwischen den beiden Katalysator-Körpern vorhandenen, inneren Hohlraum durch geneigte Flächen der Eckstücke nach innen gelenkt. Dies hat zur Folge, dass verhältnismässig wenig Abgas in die an die Eckstücke anschliessenden Abschnitte der Katalysator-Körper hineinströmt. Zudem stossen die Aussenflächen der Katalysator-Körper bei den einen Enden an die Rohrwände an, so dass das in der Nähe dieser Ränder aus den Katalysator-Körpern ausströmende Abgas stark umgelenkt und durch sehr schmale Raumbereiche strömen muss, wodurch dort ein grosser Strömungswiderstand entsteht. Dieser hemmt die Strömung durch die an die Eckstücke anschliessenden Abschnitte der Katalysator-Körper noch zusätzlich. Die Abgasströmung ist daher in den Katalysator-Körpern ungleichmässig verteilt, wodurch der Wirkungsgrad der Katalysatormittel verkleinert und der Gegendruck vergrössert werden.

Der Erfindung liegt die Aufgabe zugrunde, einen Katalysator zu schaffen, der Nachteile der bekannten Katalysatoren behebt und bei dem insbesondere ausgehend von der JP-A 56 089 836 die Formen sowie die Abmessungen des Gehäuses und der Katalysatormittel gut an den verfügbaren Platz angepasst werden können, wobei der Katalysator eine gleichmässige Verteilung des Abgases auf alle Durchgänge der Katalysatormittel, geringe Druckverluste, gute Start-Eigenschaften, und eine kostengünstige Herstellung ermöglichen soll.

Diese Aufgabe wird gemäss der Erfindung gelöst durch einen Katalysator mit den Merkmalen des Anspruches 1 gelöst.

Vorteilhafte Weiterbildungen des Katalysators gehen aus den abhängigen Ansprüchen hervor.

Die in den inneren oder äusseren Hohlraum mündenden Enden der Durchgänge werden im folgenden auch als innere bzw. äussere Enden der Durchgänge bezeichnet.

Die Katalysatormittel besitzen gemäss der Erfindung mindestens zwei Pakete von Blechelementen. Jedes dieser Blechelement-Pakete begrenzt eine Gruppe von Durchgängen.

Gemäss der Erfindung ist ein Blechelement von jedem Paar einander unmittelbar benachbarter Blechelemente mit Erhöhungen versehen. Das andere Blechelement von jedem Paar einander benachbarter Blechelemente kann dann eben sein. Jedes Paket von Blechelementen besteht dann aus abwechselnd aufeinanderfolgenden, ersten und zweiten Blechelementen, wobei die ersten Blechelemente Erhöhungen aufweisen und die zweiten Blechelemente im wesentlichen eben sind.

Die Erhöhungen eines Blechelementes bestehen zum Beispiel aus geraden, zueinander parallelen Wellen oder aus Buckeln, die vorzugsweise auf beide Seiten einer Mittelebene hin vorstehen und in einer Draufsicht auf das Blechelement vorzugsweise einen rundlichen, beispielsweise kreisförmigen Umriss haben.

Man kann jedoch eventuell auch vorsehen, dass alle Blechelemente Erhöhungen, zum Beispiel Wellen haben. Die Wellen der aufeinanderfolgenden Blechelemente können sich dann beispielsweise kreuzen.

Jedes Blechelement definiert zwei Schmiegeebenen bzw. ebene Schmiegeflächen, von denen sich jede an eine der beiden Flächen des Blechelementes anschmiegt. Wenn ein Blechelement Erhöhungen aufweist, schmiegen sich die Schmiegeebenen an die höchsten Stellen der Erhöhungen, also beispielsweise an die Scheitellinien der Wellen bzw. an die Gipfelpunkte der Buckel an. Wenn ein Blechelement eben ist, sind die durch diese definierten Schmiegeebenen identisch mit den beiden ebenen Flächen des Blechelementes.

Die aufeinanderfolgenden Blechelemente eines Pakets von Blechelementen, können dann paarweise bei Schmiegeebenen aneinander anliegen. Die Schmiegeebenen bilden dann - mit Ausnahme der sich an den beiden Enden eins Pakets befindenden Schmiegeebenen - auch Berührungsebenen, bei denen sich die einander benachbarten Blechelemente stellenweise berühren.

Die Bildung der Katalysatormittel aus mindestens zwei Paketen von Blechelementen ermöglicht, die Formen und Abmessungen der Katalysatormittel sowie des Gehäuses und insbesondere die Querschnittsform sowie die Querschnittsabmessungen des Mantels gut an den für den Katalysator verfügbaren Platz anzupassen. Man kann zum Beispiel zwei und nur zwei Pakete von Blechelementen vorsehen. Die zwei Blechelement-Pakete können sich auf einander abgewandten Seiten einer zwischen ihnen durch den inneren Hohlraum verlaufenden Mittelebene befinden und von dieser und vom inneren Hohlraum weg verlaufende Durchgänge enthalten. Das Gehäuse kann dann im Vergleich zu einem im Querschnitt kreisförmigen Gehäuse eine relativ flache Querschnittsform aufweisen. Das Gehäuse kann dann ferner eine rechtwinklig zur genannten Mittelebene gemessene, erste Querschnittsabmessung und eine parallel zur Mittelebene gemessene, zweite Querschnittsabmessung haben, die kleiner als die erste Querschnittsabmessung ist. Die zweite, kleinere Querschnittsabmessung kann zum Beispiel abhängig vom verfügbaren Platz höchstens 70% oder höchstens 60% oder sogar nur höchstens 50% der ersten, grösseren Querschnittsabmessung betragen. Dies ermöglicht, den Katalysator zum Beispiel in die Leitung einer Auspuff-Einrichtung eines Automobils bei einer Stelle einzubauen, bei der in einer quer zur Leitung und zum Mantel des Gehäuse des Katalysators verlaufenden Richtung -zum Beispiel in vertikaler Richtung - nur wenig Platz verfügbar ist.

Man kann jedoch auch Katalysatormittel mit drei Paketen von Blechelementen vorsehen und den Mantel des Gehäuses derart ausbilden, dass er im Querschnitt ein Dreieck definiert, wobei aber der Mantel abgerundete Übergänge anstelle von Ecken besitzen kann. Ein ungefähr dreieckförmiger Mantel kann in gewissen Fällen die Einbaubarkeit erleichtern. Ein solcher Katalysator kann dann beispielsweise derart unter dem Boden eines Automobils angeordnet werden, dass die Unterseite des Mantels durch eine horizontale Dreieckseite gebildet ist.

Man kann ferner Katalysatormittel vorsehen, die vier oder noch mehr um den inneren Hohlraum herum verteilte Pakete von Blechelementen besitzen. Der Mantel des Gehäuses kann dann im Querschnitt ein Polygon mit durch abgerundete Übergänge ersetzten Ecken definieren und/oder mehr oder weniger kreisförmig sein.

Die sich in zur Achse des Mantels rechtwinkligen Querschnitte ergebende maximale Querschnittsabmessung der Katalysatormittel kann zum Beispiel kleiner als die maximale axiale Abmessung der Katalysatormittel sein. Desgleichen kann die maximale Querschnittsabmessung des Mantels und des ganzen Gehäuses kleiner als die axiale Abmessung des Mantels und des ganzen Gehäuses sein.

Jedes Blechelement hat in einer Draufsicht - d.h. in einer zu den durch das Blechelement definierten Schmiegeebenen rechtwinkligen Projektion - vorzugsweise einen viereckförmigen Umriss. Ferner hat jedes Blechelement in der Draufsicht bzw. in der genannten Projektion vorzugsweise mindestens zwei gerade, zueinander parallele Ränder, wobei zum Beispiel mindestens die beiden an den inneren Hohlraum bzw. an den äusseren Hohlraum angrenzenden Ränder in der genannten Projektion gerade und parallel zueinander sind. Ferner sind vorzugsweise auch die beiden anderen Ränder jedes Blechelementes in der genannten Projektion gerade und parallel zueinander, so dass das Blechelement in der Draufsicht bzw. in der genannten Projektion ein schiefwinkliges oder rechtwinkliges Parallelogramm bildet. Dies ermöglicht, die Blechelemente mit höchstens geringem Blechabfall aus Bändern mit zueinander parallelen Längsrändern oder aus viereckigen, quadrat- oder rechteckförmigen Tafeln herzustellen.

Die erfindungsgemässe Ausbildung des Einlasses ermöglicht beim Betrieb, das in den inneren Hohlraum einströmende Abgas auch bei einer im Vergleich zu den Querschnittsabmessungen des Innenraums bzw. Durchgangs des Einlasses und des inneren Hohlraumes grossen axialen Abmessung des letzteren gleichmässig auf alle Durchgänge der Katalysatormittel zu verteilen, was zu einer guten Ausnutzung des katalytisch aktiven Materials und damit zu im Vergleich zu der pro Zeiteinheit zu behandelnden Abgasmenge günstigen Herstellungskosten beiträgt. Zudem wird wiederum ermöglicht, den Druckverlust niedrig zu halten.

Gemäss der Erfindung mündet der Einlass durch eine Endwand hindurch in den mindestens zum Teil durch die Katalysatormittel begrenzten, inneren Hohlraum. Das Abgas kann daher zwischen dem Ausströmen aus dem Einlass und dem Einströmen in die Durchgänge der Katalysatormittel höchstens noch mit kleinen Bereichen der Wandung des Gehäuses in Kontakt gelangen. Dies trägt zusammen mit der Ausbildung der Katalysatormittel dazu bei, dass die Katalysatormittel bei einem Kalt-Start - d.h. wenn sie beim Starten eines das Abgas erzeugenden Motors noch Umgebungstemperatur haben - mindestens in einem an den inneren Hohlraum angrenzenden Bereich rasch auf eine Temperatur erhitzt werden, die eine wirkungsvolle katalytische Behandlung des Abgases ermöglicht.

Wie schon beschrieben, besitzt jedes Blechelement-Paket zum Beispiel abwechselnd aufeinanderfolgende, erste, Erhöhungen aufweisende Blechelemente und zweite, im wesentlichen ebene Blechelemente, wobei die ersten und zweiten Blechelemente bei den Scheitellinien der Wellen aneinander anliegen. Diese Ausbildung der Katalysatormittel ermöglicht, in einem zu den Wellen und Durchgängen rechtwinkligen Schnitt pro Flächeneinheit der Schnittfläche eine hohe Anzahl von Durchgängen zu erzielen. Die Schnittfläche durch die zur gleichen Gruppe gehörenden Durchgänge kann dabei abhängig von der Ausbildung der letzteren mindestens einen ebenen Teil aufweisen und/oder mindestens zum Teil gekrümmt sein. Die Katalysatormittel besitzen in einem zu den Durchgängen rechtwinkligen Schnitt vorzugsweise mindestens ungefähr 62 Durchgänge pro Quadratzentimeter (d.h. mindestens ungefähr 400 Durchgänge pro Quadratzoll) oder besser mindestens ungefähr 93 Durchgänge pro Quadratzentimeter (d.h. mindestens ungefähr 600 Durchgänge pro Quadratzoll) oder noch besser mindestens ungefähr 124 Durchgänge pro Quadratzentimeter (d.h. mindestens ungefähr 800 Durchgänge pro Quadratzoll) oder sogar mindestens ungefähr 186 Durchgänge pro Quadratzentimeter (d.h. mindestens ungefähr 1200 Durchgänge pro Quadratzoll) und zum Beispiel ungefähr 248 Durchgänge pro Quadratzentimeter (d.h. ungefähr 1600 Durchgänge pro Quadratzoll).

Die von Wellenscheitel zu Wellenscheitel bzw. von Buckel-Gipfelpunkt zu Buckel-Gipfelpunkt gemessene Höhe der Wellen bzw. Buckel beträgt zweckmässigerweise höchstens 2 mm, vorzugsweise höchstens 1 mm, vorzugsweise mindestens 0,3 mm und zum Beispiel ungefähr 0,5 mm. Falls die Erhöhungen durch Wellen gebildet sind, ist die Wellenlänge beispielsweise zweimal bis dreimal so gross wie die Wellenhöhe und beträgt bei einer Wellenhöhe von ungefähr 0,5 mm zum Beispiel ungefähr 1,2 mm bis 1,4 mm.

Die Blechelemente besitzen beispielsweise einen inneren Bereich oder Kernbereich aus einem metallischen Material, nämlich aus einem Stahl, der zusätzlich zu Eisen ungefähr 20 Gew.% Chrom, ungefähr 5 Gew.% Aluminium und eventuell noch ein wenig Lanthan und/oder Yttrium enthält. Die an die Durchgänge angrenzenden Hauptabschnitte der Blechelemente weisen vorzugsweise einen Überzug aus einem Metalloxid, nämlich Aluminiumoxid auf, der häufig als "wash coat" bezeichnet wird und auf den ein katalytisch aktives Material aufgebracht ist. Dieses kann mindestens ein Edelmetall, wie Platin und/oder Rhodium aufweisen. Die Halteabschnitte der Blechelemente sind vorzugsweise blank und überzugsfrei, so dass ihre Oberflächen aus dem gleichen Material wie die inneren Bereiche oder Kernbereiche der Blechelemente, d.h. aus Stahl bestehen.

Der Erfindungsgegenstand wird anschliessend anhand in der Zeichnung dargestellter Ausführungsbeispiele erläutert. In der Zeichnung zeigt
die Fig. 1 einen Längsschnitt durch einen Katalysator, dessen Katalysatormittel zwei V-förmig angeordnete Katalysator-Körper mit je einer Gruppe von Durchgängen besitzen,
die Fig. 2 einen Längsschnitt entlang der Linie II - II der Fig. 1 durch den in der letzteren ersichtlichen Katalysator,
die Fig. 3 einen Querschnitt entlang der Linie III - III der Fig. 1 durch den in dieser ersichtlichen Katalysator,
die Fig. 4 eine Schrägansicht von einem Katalysator-Körper der Katalysatormittel des in den Fig. 1 bis 3 gezeichneten Katalysators,
die Fig. 5 einen Längsschnitt durch einen Katalysator mit zwei zueinander parallelen Katalysator-Körpern,
die Fig. 6 einen Querschnitt entlang der Linie VI - VI der Fig. 5 durch den in dieser gezeichneten Katalysator,
die Fig. 7 einen Längsschnitt durch einen anderen Katalysator, dessen Katalysatormittel zwei Gruppen von Durchgängen aufweisen,
die Fig. 8 einen Schnitt entlang der Linie VIII - VIII der Fig. 7 durch den in dieser gezeichneten Katalysator,
die Fig. 9 einen Schnitt entlang der Linie IX - IX der Fig. 7 durch den in dieser gezeichneten Katalysator,
die Fig. 10 einen der Fig. 8 entsprechenden Schnitt durch einen anderen Katalysator,
die Fig. 11 einen Längsschnitt durch einen anderen Katalysator,
die Fig. 12 eine vereinfachte Schrägansicht des Katalysators gemäss der Fig. 11, wobei vom Gehäuse nur der Umriss des Mantels angedeutet ist,
die Fig. 13 eine Schrägansicht von Teilen eines Katalysators, dessen Katalysatormittel drei Gruppen von Durchgängen besitzen,
die Fig. 14 eine Schrägansicht von Teilen eines Katalysators mit Katalysatormitteln, die vier Gruppen von Durchgängen besitzen,
die Fig. 15 einen Längsschnitt durch noch einen anderen Katalysator,
die Fig. 16 eine vereinfachte Schrägansicht der Katalysatormittel des in der Fig. 15 gezeichneten Katalysators,
die Fig. 17 eine Ansicht der Katalysatormittel gemäss der Fig. 16 in der in dieser durch den Pfeil XVII bezeichneten Blickrichtung, wobei auch noch der Mantel des Gehäuses dargestellt ist,
die Fig. 18 einen Querschnitt durch die in den Figuren 15 bis 17 ersichtlichen Katalysatormittel,
die Fig. 19 eine Ansicht der in den Figuren 15 bis 18 ersichtlichen Katalysatormittel in der in der Fig. 16 durch den Pfeil XIX bezeichneten Blickrichtung,
die Fig. 20 eine Ansicht von Katalysatormitteln mit Blechelementen, die Buckel besitzen, und
die Fig. 21 einen Schnitt entlang der Linie XXI - XXI der Fig. 20 in grösserem Massstab.

Es sei noch angemerkt, dass verschiedene Figuren ziemlich schematisiert und zum Teil nicht-massstäblich sind.

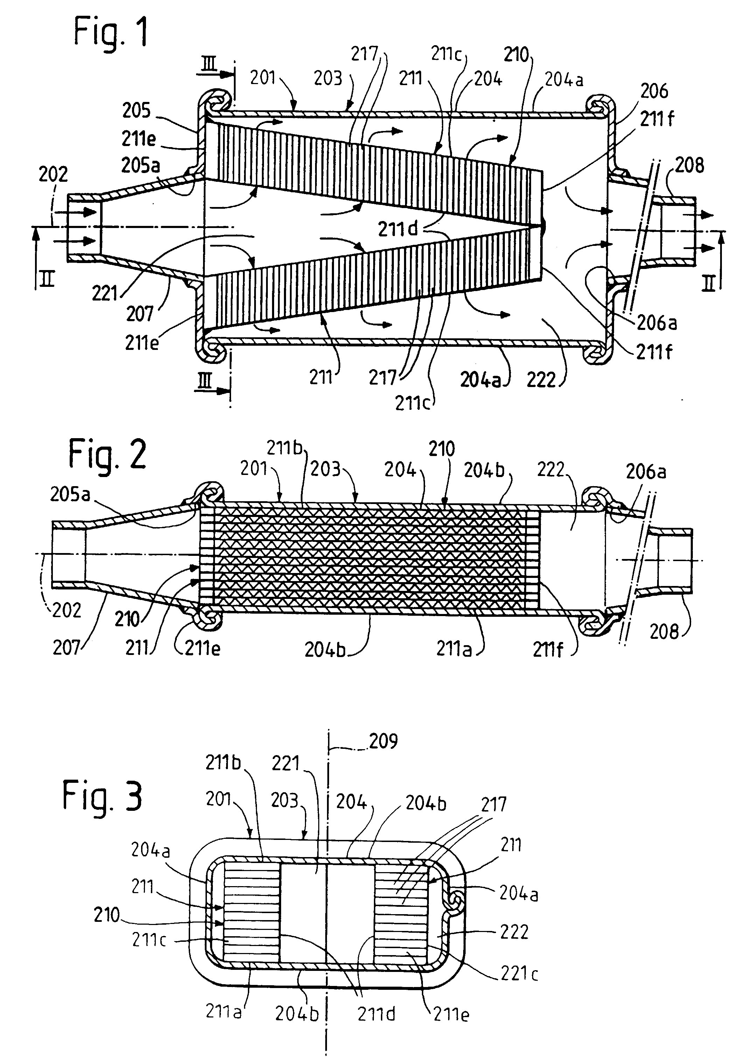

Der in den Fig. 1 bis 3 ersichtliche Katalysator 201 definiert eine Achse 202 und weist ein Gehäuse 203 auf. Dessen Wandung hat einen Mantel 204, eine erste Endwand 205 und eine zweite Endwand 206. Der Mantel 204 umschliesst die Achse 202, verläuft entlang von dieser und ist im wesentlichen parallel zu dieser. Der Mantel 204 ist zum Beispiel aus einem Blechstück gebildet, dessen zur Achse parallele Ränder durch einen in der Fig. 3 ersichtlichen Bördel fest und dicht miteinander verbunden sind. Die Ränder der Endwände 205, 206 sind beispielsweise ebenfalls durch Bördel mit Rändern des Mantels 204 verbunden.

Der Mantel 204 ist in einem zur Achse rechtwinkligen Querschnitt im wesentlichen rechteckförmig, wobei aber die Ecken des Rechtecks durch gebogene Übergänge ersetzt sind. Der Mantel bildet also zwei erste, sich gegenüberstehende Seiten- und/oder Längswände 204a und zwei zweite, sich gegenüberstehende Seiten- und/oder Längswände 204b. Die vier zum Mantel gehörenden Seiten- und/oder Längswände sind im wesentlichen - d.h. abgesehen von den erwähnten, gebogenen Übergängen und abgesehen von den Bördeln - eben und paarweise parallel zueinander. Das Gehäuse 203 besitzt eine zwischen den beiden ersten Seiten- und/oder Längswänden 204a und durch die Achse 202 verlaufende, zu den Wänden 204b senkrechte, mit der Schnittebene der Fig. 2 identische, in der Fig. 3 mit 209 bezeichnete Mittelebene. Das Gehäuse 203 und sein Mantel haben eine rechtwinklig zu dieser Mittelebene 209 gemessene, erste Querschnittsabmessung und eine parallel zur genannten Mittelebene gemessene, zweite Querschnittsabmessung, die kleiner ist als die erste Querschnittsabmessung.

Die Endwände 205, 206 sind im wesentlichen eben sowie rechtwinklig zur Achse 202 und haben der Querschnittsform des Mantels entsprechende Umrissformen. Die erste Endwand 205 besitzt eine erste Öffnung 205a. Die zweite Endwand 206 besitzt eine zweite Öffnung 206a. An jeder Endwand ist ein Stutzen befestigt, nämlich in einen die Öffnung 205a bzw. 206a begrenzenden Kragen eingeschweisst. Jeder Stutzen hat einen äusseren, zylindrischen Abschnitt und einen sich von diesem weg zum Innenraum des Gehäuses hin erweiternden Abschnitt. Die beiden Öffnungen 205a, 206a bilden zusammen mit den Stutzen den Einlass 207 bzw. den Auslass 208 des Katalysators. Der Einlass 207 und der Auslass 208 sind koaxial zur Achse 202.

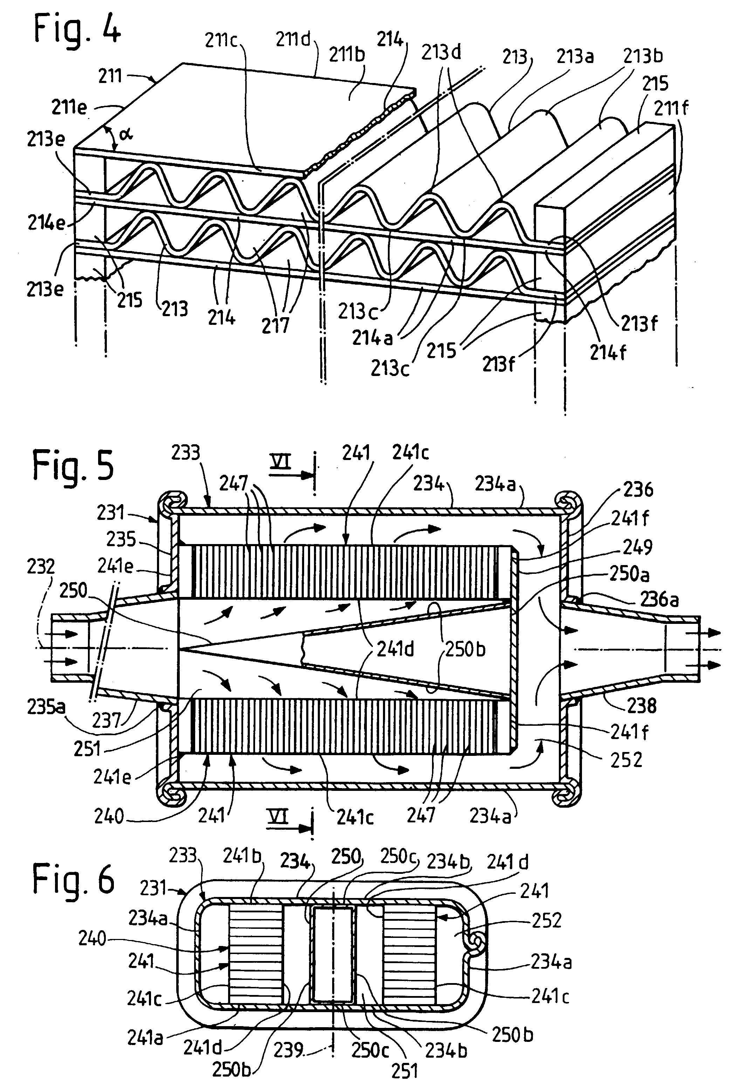

Das Gehäuse 203 enthält Katalysatormittel 210 mit zwei Katalysator-Körpern 211, von denen einer separat in der Fig. 4 gezeichnet ist. Jeder Katalysator-Körper 211 hat im wesentlichen die Form eines Prismas und besitzt sechs im wesentlichen ebene Flächen oder - wie noch erläutert wird - mindestens ebene Schmiegeflächen, nämlich eine Grundfläche 211a, eine zu dieser parallele Deckfläche 211b, eine Aussenfläche 211c, eine zu dieser parallele Innenfläche 211d, eine erste Endfläche 211e und eine zu dieser parallele, zweite Endfläche 211f. Die beiden prismenförmigen Katalysator-Körper 211 haben in dem in der Fig. 1 gezeichneten Schnitt gleich wie ihre Grundflächen 211a und Deckflächen 211b die Form eines schiefwinkligen Parallelogramms mit unterschiedlich langen Rändern. Die Aussen- und Innenflächen 211c bzw. 211d sind rechteckförmig und verbinden je einen längeren Rand der Grundfläche mit einem längeren Rand der Deckfläche. Die beiden Endflächen 211e, 211f verbinden je einen kürzeren Rand der Grundfläche mit einem kürzeren Rand der Deckfläche.

Jeder Katalysator-Körper 211 weist ein Paket von abwechselnd aufeinander folgenden, ersten Blechelementen 213 sowie zweiten Blechelementen 214 auf. Ferner besitzt jeder Katalysator-Körper die Blechelemente zusammenhaltende Haltemittel mit Distanzelementen 215. Jedes Blechelement und Halteelement besteht zum Beispiel je aus einem separaten Werkstück. Die Blechelemente 213, 214 haben in einer Draufsicht die gleichen Umrissformen wie die Grundfläche 211a sowie die Deckfläche 211b eines Katalysator-Körpers 211 und bilden also ein schiefwinkliges Parallelogramm.

Jedes erste Blechelement 213 hat einen Hauptabschnitt 213a, der mit Wellen 213b versehen ist, die sich parallel zueinander und parallel zu den Endflächen 211e, 211f von der Aussenfläche 211c zur Innenfläche 211d erstrecken. Die Wellenscheitel 213c und 213d der Wellen 213b jedes ersten Blechelementes 213 definieren zwei ebene, zur Grundfläche 211a, sowie Deckfläche 211b parallele Schmiegeflächen. Dementsprechend sind alle durch erste Blechelemente definierten, ebenen Schmiegeflächen parallel zueinander. Die von Scheitel zu Scheitel gemessene Wellenhöhe der Wellen beträgt vorzugsweise mindestens 0,3 mm und beispielsweise 0,5 mm bis 1 mm. Die Wellenlänge kann beispielsweise mindestens gleich der Wellenhöhe sein. Jedes erste Blechelement 213 hat auf einander abgewandten Seiten seines Hauptabschnittes 213a und nämlich bei den Endflächen 211e, 211f entlang den Wellen verlaufende, zu diesen parallele, streifenförmige, ebene Halteabschnitte 213e bzw. 213f.

Jedes zweite Blechelement 214 ist mindestens im wesentlichen eben. Die Grundfläche 211a und die Deckfläche 211b des Katalysator-Körpers 211 können beispielsweise je durch ein zweites Blechelement 214 gebildet sein. Jedes zweite Blechelement 214 hat einen Hauptabschnitt 214a, der bei den die Grundfläche oder Deckfläche des Katalysator-Körpers bildenden, zweiten Blechelemente an den Wellenscheiteln eines benachbarten ersten Blechelementes 213 und bei allen anderen zweiten Blechelementen an Wellenscheiteln von zwei benachbarten ersten Blechelementen 213 anliegt. Jedes zweite Blechelement 214 besitzt auf einander abgewandten Seiten seines Hauptabschnittes 214a einen streifenförmigen, selbstverständlich auch ebenen Halteabschnitt 214e bzw. 214f.

Jedes Distanzelement 215 besteht aus einem geraden Stück eines im Querschnitt viereckigen Profilstabes. Wenn man von den die Grundfläche und Deckfläche des Katalysator- Körpers bildenden Blechelementen absieht, liegen die Halteabschnitte 213e, 213f, 214e, 214f der ersten und zweiten Blechelemente 213, 214 paarweise unmittelbar aneinander an. Die Distanzelemente 215 erstrecken sich über die ganze Länge der Wellen und sind zwischen zwei Halteabschnitten 213e und 214e bzw. 213f und 214f angeordnet.

Die Blechelemente 213, 214 bestehen beispielsweise aus dem in der Einleitung genannten Stahl. Die beiden einander abgewandten Oberflächen des Hauptabschnittes 213a, 214a jedes Blechelementes 213, 214 sind mit einem Überzug aus Aluminiumoxid versehen. Auf die Aluminiumoxid-Überzüge ist katalytisch aktives Material aufgebracht, das beispielsweise Platin und/oder Rhodium aufweist. Die Halteabschnitte 213e, 213f, 214e, 214f der Blechelemente sind vorzugsweise blank und unbeschichtet, so dass ihre Oberflächen aus Stahl bestehen. Die Distanzelemente 215 bestehen ebenfalls aus einem metallischen Material - nämlich Stahl - und können bei ihren den Wellen 213b zugewandten Flächen eventuell ebenfalls mit Überzügen aus Aluminiumoxid und katalytisch aktivem Material versehen sein.

Die aneinander anliegenden Halteabschnitte 213e, 214e, 213f, 214f und Distanzelemente 215 sind starr miteinander verbunden, nämlich verschweisst. Die aneinander anliegenden Hauptabschnitte der Blechelemente 213, 214 begrenzen zusammen Durchgänge 217, die sich wie die Wellen 213b von der Aussenfläche 211c zur Innenfläche 211d erstrecken. Die beiden Flächen 211c, 211d bilden also die äussere bzw. die innere Mündungsfläche der Durchgänge. Jeder Katalysator-Körper 211 besitzt also eine Gruppe von geraden, zueinander sowie zu den Flächen 211a, 211b, 211e, 211f parallelen und zwischen diesen Flächen hindurch verlaufenden Durchgängen 217. Jeder Durchgang 217 hat eine über seine ganze Länge konstante Querschnittsfläche. Abgesehen von den an die Distanzelemente 215 angrenzenden Durchgänge haben zudem alle Durchgänge gleich grosse Querschnittsflächen. Ferner sind alle Durchgänge gleich lang.

Wie schon erwähnt, sind die Grundfläche 211a und die Deckfläche 211b jedes im wesentlichen prismaförmigen Katalysator-Körpers 211 zum Beispiel je durch ein zweites Blechelement 214 gebildet und dementsprechend im wesentlichen eben. Es wäre jedoch auch möglich, dass mindestens eines der am weitesten voneinander entfernten Blechelemente jedes Katalysator-Körpers 211 aus einem zweiten, gewellten Blechelement besteht. Falls dies zutreffen sollte, wird unter der Grundfläche und/oder Deckfläche des Katalysators die ebene, sich an die äusseren Wellenscheitel des betreffenden, äussersten Blechelementes anschmiegende Schmiegefläche verstanden.

Die Grundfläche 211a und die Deckfläche 211b jedes Katalysator-Körpers 211 sind einer der zweiten Seiten- und/oder Längswände 204b zugewandt und - im vorgängig erläuterten Sinn - im wesentlichen eben sowie parallel zu den zweiten Seiten- oder Längswänden 204b. Die beiden Katalysator-Körper 211 liegen bei ihren Grundflächen 211a und Deckflächen 211b beispielsweise gemäss den Fig. 2 und 3 je an einer der beiden zweiten, breiteren Seiten- und/oder Längswände 204b des Gehäuses 203 an.

Die Flächen 211c, 211d, 211e, 211f der beiden Katalysator-Körper 211 sind rechtwinklig zur Grundfläche 211a, zur Deckfläche 211b und zu den zweiten, breiteren Seiten- und/oder Längswänden 204b des Gehäuses. Die erste Aussenfläche 211c und die erste Endfläche 211e bilden miteinander einen in der Fig. 4 mit alpha bezeichneten Winkel, der von 90° verschieden ist, mindestens 45°, vorzugsweise mindestens 60° und beispielsweise 75° bis 87° beträgt.

Die beiden Katalysator-Körper 211 sind bei ihren ersten Endflächen 211e an sich in der Fig. 1 auf einander abgewandten Seiten der Achse 202 und der Mündungsöffnung des Einlasses 207 befindenden Bereichen der Endwand 205 dicht befestigt, beispielsweise angeschweisst. Die Aussenflächen 211c der beiden Katalysator-Körper 211 sind einander abgewandt und einer der ersten Seiten- und/oder Längswände 204a zugewandt. Die beiden Innenflächen 211d der beiden Katalysator-Körper sind einander zugewandt und nähern sich in vom Einlass 207 weg verlaufender Richtung aneinander an. Die Flächen 211c, 211d bilden mit der durch die Achse 202 verlaufenden Mittelebene 209 einen Winkel, der gleich der Differenz 90° - alpha und also höchstens 45°, vorzugsweise höchstens 30° und beispielsweise 3° bis 15° ist. Die beiden Katalysator-Körper 211 sind bei ihren dem Einlass 207 abgewandten Endflächen 211f dicht sowie fest miteinander verbunden, beispielsweise direkt und/oder über ein sie verbindendes Verbindungselement verschweisst. Die beiden Katalysator-Körper bilden also in dem in der Fig. 1 gezeichneten Schnitt zusammen ein V und sind bezüglich der zwischen den zwischen ihnen hindurch verlaufenden Mittelebene 209 spiegelsymmetrisch zueinander.

Die genannte erste sowie die zweite Querschnittsabmessung des Mantels 204 und auch die maximale, zwischen sich diagonal gegenüberstehenden Ecken des Mantels 204 sowie des ganzen Gehäuses gemessene Querschnittsabmessung sind kleiner als die Länge des Mantels 204. Desgleichen sind die analog rechtwinklig zur Achse 202 gemessenen Querschnittsabmessungen der Katalysatormittel 210 alle kleiner als die parallel zur Achse 202 gemessene Länge der Katalysatormittel 210.

Der Innenraum bzw. Durchgang des Einlasses 207 mündet bei der ersten Öffnung 205a des Gehäuses 203 in einen in diesem zwischen den Innenflächen 211d der beiden Katalysator-Körper 211 vorhandenen, im Querschnitt polygonförmigen, nämlich viereckförmigen, inneren Hohlraum 221. Der Innenraum des Einlasses 207 hat bei seiner in den inneren Hohlraum 221 mündenden Mündung im wesentlichen, d.h. mindestens ungefähr und vorzugsweise genau die gleiche polygonförmige, nämlich viereckförmige Umriss- oder Querschnittsform und im wesentlichen, d.h. mindestens ungefähr und vorzugsweise genau die gleichen Umriss- oder Querschnittsabmessungen wie das sich näher beim Einlass befindende Ende des inneren Hohlraums 221. Dieser enthält keine festen Teile, ist also vollständig frei und wird in der in der Fig. 1 entlang der Achse 202 in der vom Einlass wegverlaufenden Richtung schmäler. Die Breite und die Querschnittsfläche des inneren Hohlraums 221 nehmen vom Einlass 207 weg linear ab, so dass sie bei den inneren Enden am weitesten vom Einlass entfernten Durchgänge 247 fast auf den Wert Null abnehmen, d.h. praktisch verschwinden.

Die zwei von den Katalysator-Körpern gebildeten Gruppen von Durchgängen 217 sind rechtwinklig zur Mittelebene 209 und verlaufen auf einander abgewandten Seiten und vom inneren Hohlraum 221 von diesem weg nach aussen. Ferner stehen die beiden Gruppen von Durchgängen 217 bei den in den äusseren Hohlraum 222 mündenden, äusseren Durchgangsenden in einem Abstand voneinander, der sehr viel grösser ist als der Abstand von einander benachbarten, zur gleichen Gruppe, d.h. zum gleichen Katalysator-Körper gehörenden Durchgängen.

Zwischen den Innenflächen der ersten Seiten- oder Längswänden 204a des Gehäuses und den diesen zugewandten, ersten Seitenflächen 211c der Katalysator-Körper sind Zwischenräume vorhanden, die zusammen mit einem zwischen der Innenfläche der Endwand 206 des Gehäuses und den Endflächen 211f der Katalysator-Körper vorhandenen Zwischenraum einen äusseren Hohlraum 222 bilden, der bei der zweiten Endwand 206 des Gehäuses mit dem Innenraum des Auslasses 208 verbunden ist. Die in den äusseren Hohlraum 222 mündende Mündungsöffnung des Innenraums bzw. Durchgangs des Auslasses 208 kann kreisförmig oder analog wie die Mündungsöffnung des Einlasses 207 viereckförmig sein.

Der Katalysator 201 kann für seine Verwendung beispielsweise in eine Leitung einer Auspuff-Einrichtung des Benzin-Verbrennungsmotors eines Automobils eingebaut und derart unter dessen Boden angeordnet werden, dass die zweiten, breiteren Seiten- und/oder Längswände 204b des Gehäuses ungefähr parallel zum Boden des Automobils und zur Fläche sind, auf der dieses steht oder fährt. Der Katalysator 201 beansprucht wegen seiner relativ flachen Form dann nur eine geringe Höhe.

Beim Betrieb des Katalysators 201 entsteht in diesem eine in der Fig. 1 durch Pfeile dargestellte Abgas-Strömung. Das Abgas strömt durch den Einlass 207 in den inneren Hohlraum 221, wird in diesen umgelenkt und strömt bei den als Abgas-Eintrittsflächen dienenden Innenflächen 211d der Katalysator-Körper in die inneren Enden der Durchgänge 217 hinein. Das Abgas wird beim Durchströmen der Durchgänge katalytisch behandelt, tritt bei den als Abgas-Austrittsflächen dienenden Aussenflächen 211c wieder aus den Katalysator-Körpern aus und strömt dann durch den äusseren Hohlraum 222 zum Auslass.

Die Neigung der Innenflächen 211d gegen die Achse 202 und die daraus mit wachsendem Abstand vom Einlass resultierende Abnahme der Querschnittsfläche des inneren Hohlraums tragen dazu bei, dass der Abgas-Strom beim Einströmen in die Katalysator-Körper gleichmässig über die ganzen, relativ grossen, als Abgas-Eintrittsfläche dienenden Innenflächen 211d und dementsprechend gleichmässig über alle Durchgänge 217 verteilt wird. Dies ermöglicht, bei der katalytischen Behandlung einen hohen Wirkungsgrad zu erzielen und den durch den Katalysator verursachten Druckverlust bzw. Gegendruck gering zu halten.

Das Abgas kann zwischen der durch die erste Öffnung 205a gebildete Mündung des Einlasses 207 und den als Abgas-Eintrittsflächen dienenden, Aussenflächen 211d der Katalysator-Körper nur mit relativ kleinen Bereichen der Wände des Gehäuses 203 in Kontakt gelangen. Das Abgas kann dementsprechend zwischen dem Einlass und den Abgas-Eintrittsflächen der Katalysator-Körper nur wenig Wärme über die Gehäuse-Wandung an die Umgebung abgeben. Die beiden Katalysator-Körper geben ebenfalls nur relativ langsam Wärme über die Gehäuse-Wandung an die Umgebung ab. Bei einem Kalt-Start werden daher mindestens die an den inneren Hohlraum 221 angrenzenden Bereiche der Katalysator-Körper 211 durch das Abgas rasch auf eine Temperatur erwärmt, die eine wirkungsvolle katalytische Behandlung des Abgases ermöglicht.

Der in den Fig. 5 und 6 ersichtliche Katalysator 231 definiert eine Achse 232 und besitzt ein Gehäuse 233 mit einem Mantel 234. Dieser hat zwei erste Seiten- und/oder Längswände 234a und zwei zweite Seiten- und/oder Längswände 234b. Der Mantel 234 ist im Querschnitt wiederum im wesentlichen rechteckförmig, so dass die Seiten- und/oder Längswände im wesentlichen eben und paarweise parallel zueinander sind. Ferner sind die ersten Seiten- und/oder Längswände 234a schmäler als die zweiten Seiten- und/oder Längswände 234b. Das Gehäuse besitzt eine erste Endwand 235 mit einer ersten Öffnung 235a und eine zweite Endwand 236 mit einer zweiten Öffnung 236a. Die beiden Öffnungen bilden zusammen mit in sie eingeschweissten Stutzen einen Einlass 237 bzw. einen Auslass 238. In der Fig. 6 ist eine zwischen den beiden Wänden 234a durch die Achse 232 verlaufende Mittelebene 239 gezeichnet.

Das Gehäuse enthält Katalysatormittel 240 mit zwei Katalysator-Körpern 241, die auf einander angewandten Seiten der Mittelebene 239 angeordnet und bezüglich dieser symmetrisch sind. Jeder Katalysator-Körper 241 hat eine Grundfläche 241a, eine Deckfläche 241b, eine Aussenfläche 241c, eine Innenfläche 241d, eine erste Endfläche 241e und eine zweite Endfläche 241f. Die beiden Katalysator-Körper 241 bilden in dem in der Fig. 5 ersichtlichen Schnitt ein Parallelogramm mit zueinander rechtwinkligen Seiten, nämlich ein Rechteck. Dementsprechend bilden die Grundfläche 241a sowie die Deckfläche 241b jedes Katalysator-Körpers 241 ein Rechteck. Die Flächen 241c, 241d, 241e, 241f sind rechtwinklig zur Grundfläche 241a und zur Deckfläche 241b. Jeder Katalysator-Körper 241 bildet also im wesentlichen ein quaderförmiges Prisma.

Die beiden Katalysator-Körper 241 sind abgesehen von den anderen Formen ihrer Grund- und Deckflächen beispielsweise ähnlich ausgebildet wie die Katalysator-Körper 211. Sie besitzen insbesondere erste, mit Wellen versehene Blechelemente und zweite, im wesentlichen ebene Blechelemente.

Die verschiedenen Blechelemente der Katalysator-Körper 241 bilden dann in der Draufsicht ein rechtwinkliges Parallelogramm, nämlich ein Rechteck, und können beispielsweise wie bei dem Katalysator-Körper 211 je aus einem separaten Blechstück bestehen und miteinander und mit Distanzelementen verschweisst sein. Die zum gleichen Katalysator-Körper gehörenden Blechelemente können jedoch auch durch Abschnitte eines einstückigen, gefalteten Blechbandes gebildet sein und abwechselnd bei der ersten oder zweiten Endfläche über eine Falte zusammenhängen. Ferner besitzt jeder Katalysator-Körper 241 eine Gruppe von geraden, zueinander parallelen, rechtwinklig zur Innenfläche 241d von dieser zur Aussenfläche 241c verlaufenden Durchgängen 247.

Jede Grund- und Deckfläche 241a, 241b der beiden Katalysator-Körper 241 ist einer der zweiten, breiteren Seiten- oder Längswände 243b zugewandt und liegt an einer dieser Wände an. Die beiden Katalysator-Körper 241 liegen bei ihren ersten Endflächen 241e auf einander gegenüberstehenden Seiten der ersten Öffnung 235a an der ersten Endwand 235 an und sind beispielsweise durch Schweissverbindungen mit dieser verbunden. Die Flächen 241c, 241d der beiden Katalysator-Körper 241 sind parallel zueinander und zur Mittelebene 239. Die Durchgänge 247 sind dementsprechend rechtwinklig zur Mittelebene 239. Die Aussenflächen 241c der beiden Katalysator-Körper stehen je einer der ersten, schmäleren Seiten- und/oder Längswände 234a in Abstand gegenüber und sind parallel zu diesen Wänden 234a. Die Innenflächen 241d der beiden Katalysator-Körper sind parallel zueinander und stehen sich über ihre ganzen Längen in Abstand gegenüber. Die beiden der ersten Endwand 235 abgewandten, zweiten Endflächen 241f der Katalysator-Körper sind dicht und fest mit einem aus einer rechteckförmigen Scheibe gebildeten, in Abstand von der zweiten Endwand 236 stehenden End- und/oder Abschlusselement 249 verbunden, zum Beispiel verschweisst. Die beiden Katalysator-Körper 241 und die beiden von ihnen gebildeten Gruppen von Durchgängen 247 stehen überall in einem Abstand voneinander, der sehr viel grösser ist als der Abstand von einander benachbarten, im gleichen Katalysator-Körper vorhandenen Durchgängen.

Ein zwischen den beiden Katalysator-Körpern 241 eingesetztes, vorzugsweise hohles Begrenzungselement 250 hat ein im Querschnitt viereckiges, rechteck- oder quadratförmiges Ende 250a, das fest und dicht mit dem End- und/oder Abschlusswand 249 und/oder direkt mit den dem Einlass abgewandten Enden der Katalysator-Körper 241 verbunden, beispielsweise verschweisst ist. Die parallel zu den Durchgängen 247 gemessene Breite des Endes 250a des Begrenzungselementes 250 ist fast oder genau gleich dem Abstand der einander zugewandten Innenflächen 241d der beiden Katalysator-Körper. Das Begrenzungselement 250 ragt zwischen den beiden Katalysator-Körpern 241 hindurch bis ungefähr zur Mündung des Einlasses 237. Das Begrenzungselement hat bei der Mündung des Einlasses ein schneidenartiges oder eventuell ein wenig verrundetes Ende, dessen Kante oder Scheitellinie in der genannten Mittelebene liegt, welche zwischen den beiden Wänden 234a und zwischen den beiden Katalysator-Körpern 241 durch die Achse 232 verläuft. Das Begrenzungselement 250 hat zwei einander abgewandte Begrenzungsflächen 250b, von denen jede einer Innenfläche 241d vor einem der Katalysator-Körper 241 zugewandt ist. Die beiden Begrenzungsflächen 250b sind vom Einlass 237 weg entlang der Achse 232 zueinander geneigt, so dass sich jede Begrenzungsfläche vom Einlass weg der ihr gegenüberstehenden Innenfläche 241d eines Katalysator-Körpers 241 nähert. Die Begrenzungsflächen 250b sind eben und bilden mit der Achse 232, der zwischen ihnen hindurch verlaufenden Mittelebene und den Innenflächen 241d einen Winkel, der höchstens 45°, vorzugsweise höchstens 30° und beispielsweise höchstens 15° beträgt. Das Begrenzungselement 250 hat ferner zwei zueinander und zu den zweiten Seiten- oder Längswänden 234b des Gehäuses parallele Flächen 250c, von denen jede einer der zweiten Seiten- oder Längswände 234b zugewandt ist und an dieser anliegt.

Der Innenraum des Einlasses 237 mündet in einen zwischen den beiden Katalysator-Körper 241 vorhandenen, inneren Hohlraum 251. Das Begrenzungselement 250 unterteilt den inneren Hohlraum 251 mindestens im grössten Teil von dessen axialer Ausdehnung in zwei freie Bereiche, deren Breiten und Querschnittsflächen entlang der Achse 232 vom Einlass 237 weg linear abnehmen und bei den am weitestens vom Einlass entfernten Durchgängen fast Null werden. Zwischen den ersten Seiten- oder Längswänden 234a sowie der Endwand 236 des Gehäuses 234 und den ersten Seitenflächen 241c der Katalysator-Körper sowie der Abschlusswand 249 ist ein äusserer Hohlraum 252 vorhanden, der mit dem Innenraum des Auslasses 238 zusammenhängt.

Beim Betrieb des Katalysators 241 strömt das Abgas durch den Einlass 237 in den durch das Begrenzungselement 250 in zwei freie Bereiche unterteilten, inneren Hohlraum 251. Das Abgas wird in diesen freien Bereichen des inneren Hohlraumes 251 umgelenkt und strömt bei den an die freien HohlraumBereiche angrenzenden, zur Achse 232 parallelen, Innenflächen 241d der Katalysator-Körper 241 in deren Durchgänge 247. Die Umlenkung des Abgases im inneren Hohlraum 251 wird dabei durch die vom Einlass 237 weg gegen die als Abgas-Eintrittsflächen dienenden Innenflächen 241d geneigten Begrenzungsflächen 250b unterstützt. Das Abgas strömt dann durch die Durchgänge 247 nach aussen in den äusseren Hohlraum 252 und durch diesen zum Auslass.

Soweit vorgängig nichts anderes geschrieben wurde, ist der Katalysator 231 ähnlich ausgebildet wie der Katalysator 201 und besitzt ähnliche Eigenschaften wie dieser.

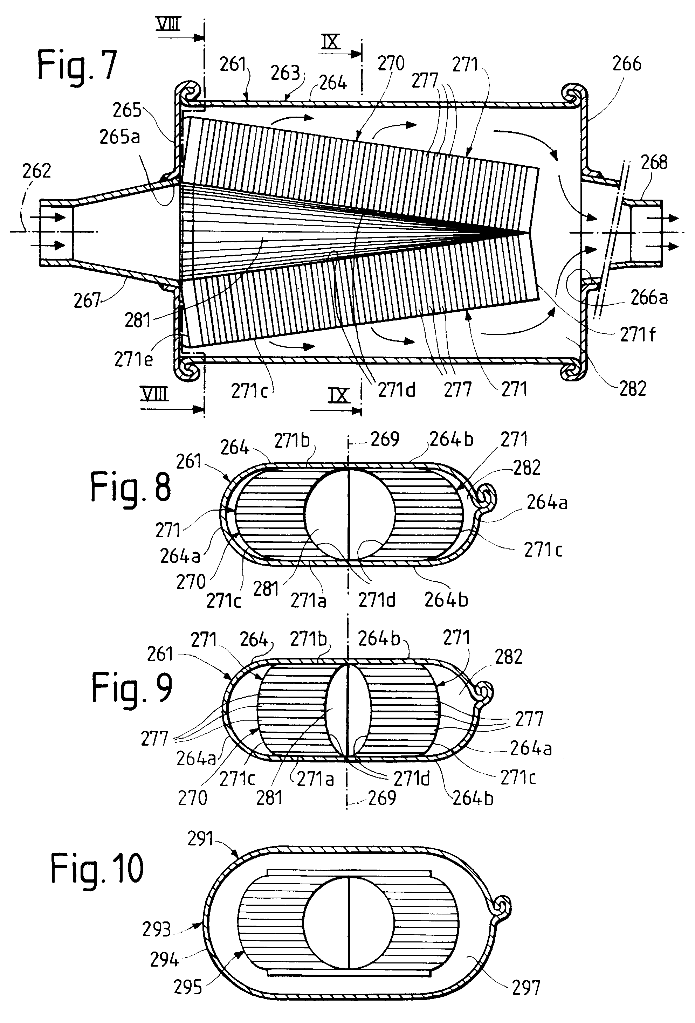

Der in den Fig. 7 bis 9 ersichtliche Katalysator 261 besitzt eine Achse 262 und ein Gehäuse 263 mit einem die Achse 262 umschliessenden Mantel 264. Dieser hat zwei erste, im Querschnitt beispielsweise bogenförmige Seiten- und/oder Längswände 264a und zwei zweite, zum Beispiel ebene sowie zueinander parallele Längswände 264b. Der Mantel ist an seinen Enden mit einer erstend Endwand 265 bzw. einer zweiten Endwand 266 verbunden. Die beiden Endwände haben eine zur Achse 262 koaxiale Öffnung 265a bzw. 266a, in die ein als Einlass 267 bzw. Auslass 268 dienender Stutzen eingeschweisst ist. Das Gehäuse definiert eine zwischen den Wänden 264a hindurch und durch die Achse 262 verlaufende Mittelebene 269 und hat eine rechtwinklig zu dieser gemessene, erste Querschnittsabmessung sowie eine parallel zur Mittelebene 269 gemessene, zweite Querschnittsabmessung, die wiederum kleiner als die erste Querschnittsabmessung ist.

Die im Gehäuse angeordneten Katalysatormittel 270 weisen zwei Katalysator-Körper 271 auf. Diese sind spiegelsymmetrisch bezüglich der Mittelebene 269. Die beiden Katalysator-Körper 271 haben im wesentlichen ebene aneinander anstossende Grundflächen 271a und ebene, aneinander anstossende Deckflächen 271b oder eine gemeinsame, zusammenhängende Grundfläche 271a und eine gemeinsame, zusammenhängende Deckfläche 271b. Jeder Katalysator-Körper 271 besitzt ferner eine Aussenfläche 271c, eine Innenfläche 271d, eine erste Endfläche 271c und eine zweite Endfläche 271f. Die Flächen 271a, 271b sind parallel zueinander sowie zu den Wänden 264b und liegen an diesen an. Die beiden Innenflächen 271d sind im Querschnitt gekrümmte Regel flächen und stossen bei ihren zur Achse 262 parallelen Längsrändern aneinander an. Die sich näher beim Einlass 267 befindenden, in der Fig. 8 ersichtlichen Ränder der beiden Innenflächen 271d bilden zusammen eine in sich geschlossene Linie, nämlich einen Kreis. Die beiden Innenflächen 271d stehen also an ihrem sich beim Einlass 267 befindenden Ende bei ihren mittleren Querschnittsbereichen - d.h. mit Ausnahme ihrer aneinander anstossenden Längsränder - in Abstand voneinander. Die mittleren Querschnittsbereiche der beiden Innenflächen 271c nähern sich in der vom Einlass 267 weg verlaufenden Richtung derart aneinander an, dass sie bei ihren weiter vom Einlass entfernten Enden gerade, im wesentlichen zusammenfallende und in der Mittelebene 269 liegende Ränder haben. In dem sich zwischen den beiden Enden der Katalysator-Körper befindenden, in der Fig. 9 gezeichneten Querschnitt sind die beiden Innenflächen 271d zusammen linsenförmig. Die beiden Aussenflächen 271c sind ebenfalls im Querschnitt gekrümmte Regelflächen. Jede Aussenfläche 271c ist in allen zur Achse 262 parallelen sowie zur Mittelebene 269 rechtwinkligen Schnitten mindestens annähernd parallel zur Innenfläche 271d des betreffenden Katalysator-Körpers 271.

Jeder Katalysator-Körper 271 ist aus einem Paket von mindestens ursprünglich rechteckförmigen, abwechselnd aufeinanderfolgenden, ersten und zweiten Blechelementen gebildet. Die ersten Blechelemente besitzen Wellen. Die Wellen verlaufen rechtwinklig zu den Längsrändern der ersten Blechelemente. Die zweiten Blechelemente sind im wesentlichen eben. Die ersten und zweiten Blechelemente werden bei der Herstellung der Katalysator-Körper 271 derart gegeneinander verdreht aufeinander gestapelt und durch Haltemittel mit an den Enden der Katalysator-Körpers angeordneten Distanzelementen starr miteinander verbunden, dass die äusseren und die inneren Längsränder der Blechelemente zusammen die Aussenflächen 271c bzw. die Innenflächen 271d der Katalysator-Körper bilden. Wenn die Blechelemente der fertigen Katalysator-Körper genau rechteckförmig bleiben, bilden die Endflächen 271e, 271f gekrümmte Regelflächen. Man kann jedoch die ersten Endflächen 271e beispielsweise mindestens bei ihren an die Innenflächen 271d anstossenden Bereichen eben und parallel zur ersten Endwand 265 ausbilden, an der sie beim fertigen Katalysator 261 anliegen. Die beiden Katalysator-Körper 271 sind starr und dicht miteinander verbunden, beispielsweise verschweisst. Ferner sind die beiden Katalysator-Körper mit dem Gehäuse 263 verbunden, beispielsweise verschweisst. Dabei sind insbesondere die ersten Endflächen 271e der Katalysator-Körper dicht mit der ersten Endwand 265 des Gehäuses verbunden.

Jeder Katalysator-Körper 271 besitzt eine Gruppe von geraden Durchgängen 277, die von der Innenfläche 271d zur Aussenfläche 271c verlaufen. Alle Durchgänge 277 sind parallel zu den zweiten Seiten- und/oder Längswänden 264b und also auch zu ein und derselben Ebene. Ferner sind alle durch das gleiche Paar von Blechelementen gebildeten Durchgänge parallel zueinander. Dagegen bilden die Durchgänge mit der Mittelebene 269 Winkel, deren Wert vom Abstand von der rechtwinklig zur Mittelebene 269 durch die Achse 262 und durch die Mitten der Katalysator-Körper hindurch verlaufenden Ebene abhängig ist. Bei den sich am nächsten bei der Grundfläche 271a oder der Deckfläche 271b befindenden Durchgängen beträgt der genannte Winkel mindestens annähernd 90°. Bei der sich in der Mitte zwischen der Grundfläche und der Deckfläche befindenden Schnittebene der Fig. 7 bilden die Durchgänge 277 mit der Mittelebene 269 dann einen von 90° abweichenden, vorzugsweise mindestens 45° und beispielsweise mindestens 60° betragenden Winkel. Die Durchgänge 277 haben eine über ihre ganze Länge konstante Querschnittsfläche. Ferner sind alle Durchgänge 277 mindestens annähernd gleich lang.

Der Einlass 267 mündet in einen von den beiden Innenflächen 271d umschlossenen, inneren, freien Hohlraum 281. Die in den inneren Hohlraum mündende Mündungsöffnung des Einlasses ist kreisförmig und besitzt ungefähr den gleichen Durchmesser wie das sich bei der ersten Endwand 265 befindende Ende des inneren Hohlraums 281. Die Querschnittsfläche des inneren Hohlraums 281 nimmt entsprechend der Ausbildung der Innenflächen 271d der Katalysator-Körper in vom Einlass weg verlaufender Richtung linear mit dem Abstand vom Einlass ab. Zwischen den Aussenflächen 271c sowie den zweiten Endflächen 271f und den Wänden 264a, 266 des Gehäuses ist ein mit dem Auslass 268 verbundener, äusserer Hohlraum 282 vorhanden. Beim Katalysator 261 stossen zwar die durch die Innenflächen 271d gebildeten inneren Mündungsflächen der beiden Gruppen von Durchgängen aneinander an. Bei den restlichen Teilen der Durchgänge und insbesondere bei deren in die Aussenflächen 271c mündenden, äusseren Enden stehen die beiden Gruppen von Durchgängen jedoch wiederum in Abstand voneinander.

Beim Betrieb des Katalysators 261 wird durch den Einlass 267 Abgas in den inneren Hohlraum 281 eingeleitet, tritt bei den als Abgas-Eintrittsflächen dienenden Innenflächen 271d in die Durchgänge 277 der beiden Katalysator- Körper 271 ein, strömt bei den als Abgas-Austrittsflächen dienenden Aussenflächen 271c wieder aus den Katalysator- Körpern aus und strömt dann durch den äusseren Hohlraum 282 zum Auslass 268. Da der innere Hohlraum 281 des Katalysators 261 im wesentlichen vollständig und ausschliesslich durch die Innenflächen 271d der Katalysator-Körper 271 begrenzt ist, kann das Abgas zwischen dem Ausströmen aus dem Einlass und dem Einströmen in die Katalysator- Körper noch weniger Wärme an die Umgebung des Katalysators 261 abgeben als bei den vorher beschriebenen Katalysatoren 201 und 231. Dementsprechend werden die Katalysator-Körper 271 bei einem Kalt-Start eher noch schneller auf die für die katalytische Behandlung des Abgases erforderliche Betriebstemperatur erhitzt werden als bei den Katalysatoren 201 und 231.

Der in der Fig. 10 ersichtliche Katalysator 291 besitzt ein Gehäuse 293 mit einem Mantel 294 und im Gehäuse angeordnete Katalysatormittel 295. Der Katalysator 291 ist weitgehend ähnlich ausgebildet wie der in den Fig. 7 bis 9 dargestellte Katalysator 261, unterscheidet sich aber von diesem dadurch, dass zwischen dem Mantel 294 und den Katalysatormitteln 295 ein diese im Querschnitt vollständig umschliessender, äusserer Hohlraum 297 vorhanden ist.

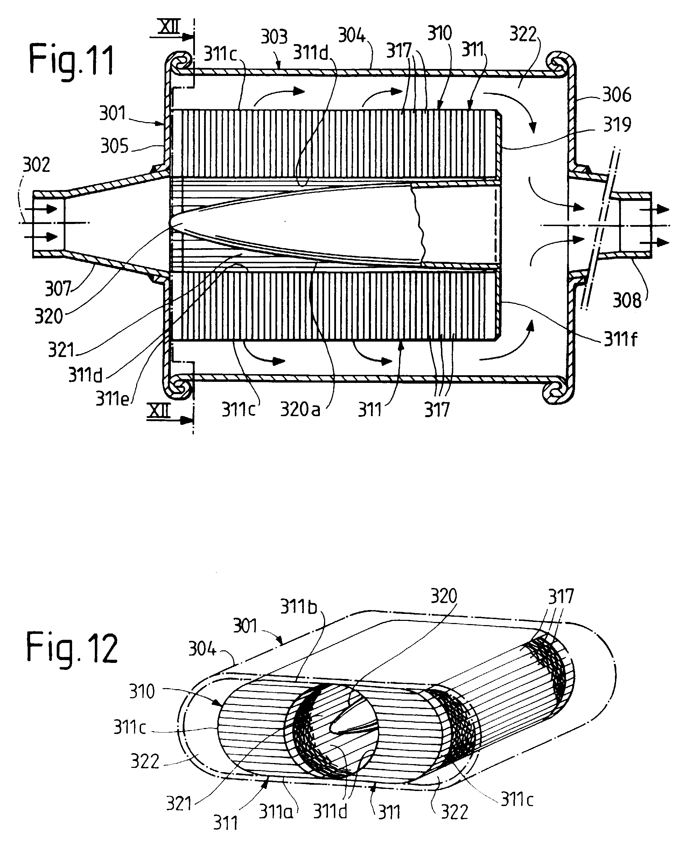

Der in den Fig. 11 und 12 ersichtliche Katalysator 301 besitzt eine Achse 302 und ein Gehäuse 303. Dieses ist ähnlich ausgebildet wie das Gehäuse 263 und besitzt einen Mantel 304, Endwände 305 sowie 306, einen Einlass 307 und einen Auslass 308. Das Gehäuse 303 enthält Katalysatormittel 310 mit zwei auf verschiedenen Seiten einer Mittelebene des Gehäuses angeordneten Katalysator-Körpern 311. Diese besitzen eine Grundfläche 311a, eine Deckfläche 311b, eine Aussenfläche 311c, eine Innenfläche 311d und zwei Endflächen 311e, 311f. Die Innenflächen 311d sind parallel zur Achse 302 und bilden zusammen eine im Querschnitt ungefähr kreisförmige Zylinderfläche. Die Aussenflächen 311c sind ebenfalls parallel zur Achse 302 und im Querschnitt derart gebogen, dass die rechtwinklig zur genannten Mittelebene gemessenen Abstände der Aussenfläche 311c von der Innenfläche 311d des betreffenden Katalysator-Körpers überall gleich gross sind. Die Endflächen 311e und 311f der Katalysator-Körper sind eben und rechtwinklig zur Achse 302. Jeder Katalysator-Körper 311 besitzt erste Blechelemente mit zum Teil in Fig. 12 gezeichneten Wellen sowie zweite, im wesentlichen ebene Blechelemente. Jeder Katalysator-Körper besitzt eine Gruppe von geraden, rechtwinklig zur genannten Mittelebene von der Innenfläche 311d zur Aussenfläche 311c verlaufenden und im wesentlichen gleich langen Durchgängen 317.

Die beiden Katalysator-Körper 311 sind starr und dicht miteinander und mit der Endwand 305 verbunden. An dem dieser abgewandten Ende der Katalysator-Körper 311 ist ein scheibenförmiges End- und/oder Abschlusselement 319 befestigt. Dieses hält ein Begrenzungselement 320, das in den von den Innenflächen 311d umschlossenen, inneren Hohlraum 321 hinein bis ungefähr zur Mündung des Einlasses ragt. Das Begrenzungselement 320 ist zum Beispiel hohl, rotationssymmetrisch zur Achse 302 sowie ungefähr paraboloidförmig und hat aussen eine Begrenzungsfläche 320a. Diese begrenzt zusammen mit den Innenflächen 311d der beiden Katalysator-Körper 311 einen im Querschnitt ringförmigen, freien Bereich des inneren Hohlraums 321. Die Querschnittsfläche dieses freien Bereichs des inneren Hohlraums 321 nimmt vom Einlass 307 weg linear ab, so dass sie bei den inneren Enden der am weitesten vom Einlass entfernten Durchgänge 317 fast den Wert Null hat. Die äusseren Enden der Durchgänge 317 münden in einen äusseren Hohlraum 322, der mit dem Auslass 308 verbunden ist.

Soweit vorgängig nichts anderes angegeben wurde, ist der Katalysator 301 ähnlich wie der Katalysator 261 ausgebildet.

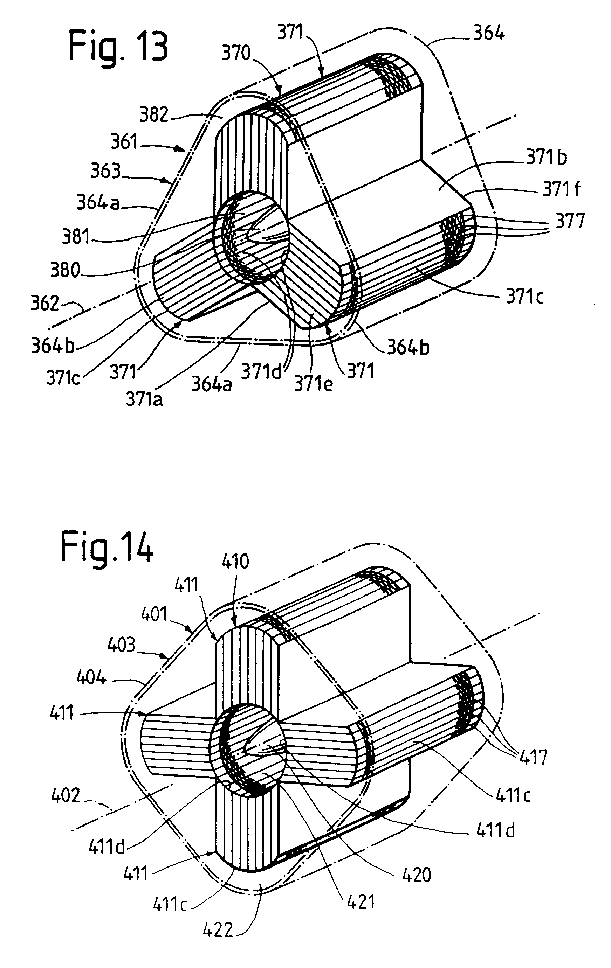

Der zum Teil in der Fig. 13 ersichtliche Katalysator 361 definiert eine Achse 362 und besitzt ein Gehäuse 363, von dem nur der Umriss des die Achse 362 umschliessenden Mantels 364 angedeutet ist. Dieser besitzt drei um die Achse herum verteilte, ebene Seiten- und/oder Längswände 364a und definiert im Querschnitt ein gleichseitiges Dreieck, wobei aber die Ecken des Dreiecks durch im Querschnitt gebogene Seiten- und/oder Längswände 364b ersetzt sind.

Das Gehäuse 363 enthält Katalysatormittel 370 mit drei um die Achse 362 herum verteilten, gegen die gebogenen Wände 364b ragenden Katalysator-Körpern 371. Jeder von diesen besitzt zwei ebene, zueinander und zur Achse 362 parallele Seitenflächen 371a bzw. 371b, eine Aussenfläche 371c, eine Innenfläche 371d und zwei Endflächen 371e bzw. 371f. Die Aussenflächen 371c und Innenflächen 371d sind im Querschnitt gebogen und zur Achse 362 parallel. Die drei Innenflächen 371d bilden zusammen eine im Querschnitt kreisförmige Zylinderfläche. Die Aussenflächen 371c haben parallel zu den Seitenflächen 371a, 371b des betreffenden Katalysator-Körpers gemessen überall mindestens annähernd den gleichen Abstand von den Innenflächen 371d. Die Endflächen 371e, 371f sind im wesentlichen eben und rechtwinklig zur Achse 362. Jeder Katalysator-Körper 371 besitzt ein Paket von rechteckförmigen, abwechselnd aufeinanderfolgenden, ersten und zweiten Blechelementen. Die ersten Blechelemente weisen zum Teil in der Fig. 13 angedeutete Wellen auf, während die zweiten Blechelemente im wesentlichen eben und parallel zur Achse 362 sind. Jeder Katalysator-Körper besitzt eine Gruppe von geraden Durchgängen 377, die sich parallel zu einer durch die Achse 362 sowie den betreffenden Katalysator-Körper verlaufenden Ebene und zueinander von der Innenfläche 371d zur Aussenfläche 371c erstrecken, rechtwinklig zu einer durch die Achse 362 verlaufenden, der Innenfläche 371d des betreffenden Katalysator-Körpers gegenüberstehenden Ebene sind, über ihre ganze Länge eine konstante Querschnittsfläche haben und alle mindestens annähernd gleich lang sind.

Die drei Katalysator-Körper 371 umschliessen ein ungefähr paraboloidförmiges Begrenzungselement 380. Dieses begrenzt zusammen mit den Innenflächen 371d der Katalysator-Körper 371 einen im Querschnitt ringförmigen, freien Bereich eines im Querschnitt vollständig von den Innenflächen 371d umschlossenen, inneren Hohlraums 381, in den der nicht gezeichnete Einlass mündet und dessen Querschnittsfläche vom Einlass weg abnimmt. Der zwischen dem Mantel 364 und den Flächen 371a, 371b, 371c der Katalysator-Körper 371 vorhandene, äussere Hohlraum 382 ist mit dem nicht gezeichneten Auslass des Gehäuses verbunden. Die drei Gruppen von Durchgängen 377 verlaufen also in drei verschiedenen Richtungen vom inneren Hohlraum 381 weg zum äusseren Hohlraum 382 und stehen mit Ausnahme der inneren Enden der Durchgänge überall in Abstand voneinander.

Der in der Fig. 14 ersichtliche Katalysator 401 definiert eine Achse 402 und besitzt ein Gehäuse 403, von dem nur der Mantel 404 angedeutet ist. Dieser besitzt zum Beispiel vier ebene, um die Achse herum verteilte Wände und vier im Querschnitt gebogenen Wände, könnte aber stattdessen im Querschnitt überall gebogen und mehr oder weniger kreisförmig sein.

Das Gehäuse 403 enthält Katalysatormittel 410 mit vier Katalysator-Körpern 411. Diese sind gleichmässig um die Achse 402 herum verteilt und bilden zusammen ein Kreuz. Die Katalysator- Körper 411 sind ähnlich ausgebildet wie die Katalysator- Körper 371 und weisen insbesondere je eine Aussenfläche 411c und eine Innenfläche 411d auf. Jeder Katalysator-Körper 411 besitzt wiederum ein Paket von Blechelementen und eine Gruppe von geraden, zueinander parallelen, von der Innenfläche 411d zur Aussenfläche 411c verlaufenden Durchgängen 417. Die Innenflächen 411d bilden zusammen eine geschlossene Zylinderfläche und umschliessen ein paraboloidförmiges Begrenzungselement 420 sowie einen inneren Hohlraum 421 mit einem ringförmigen freien Bereich, dessen Querschnittsfläche vom in ihn mündenden, nicht gezeichneten Einlass weg abnimmt. Zwischen dem Mantel 404 und den Aussenflächen 411c ist ein äusserer, mit dem nicht gezeichneten Auslass verbundener Hohlraum 422 vorhanden.

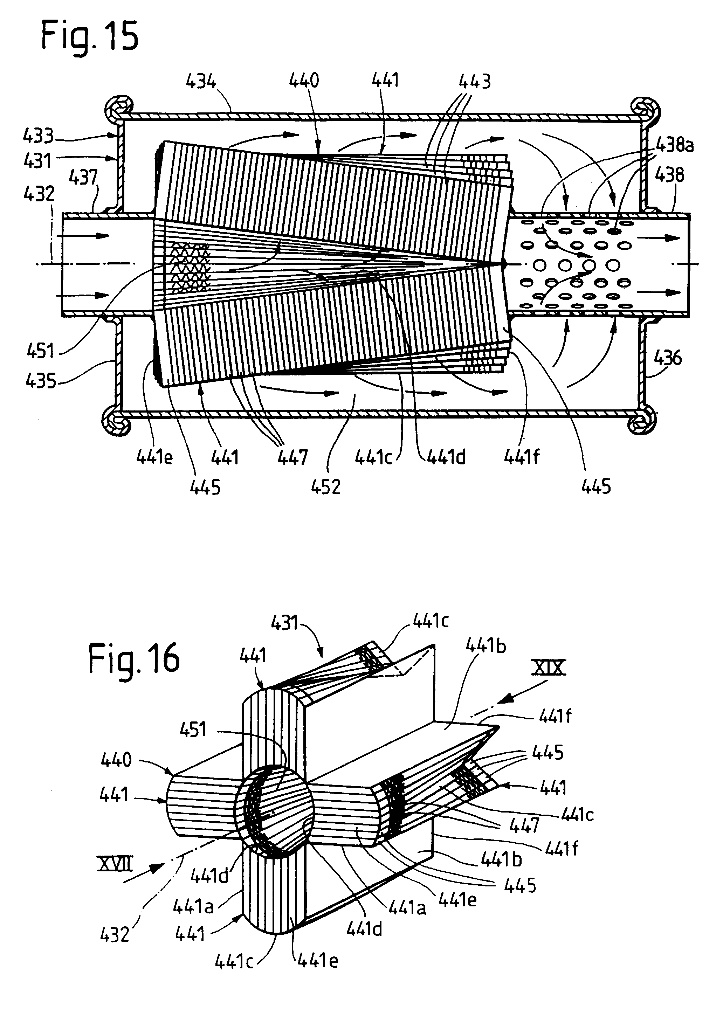

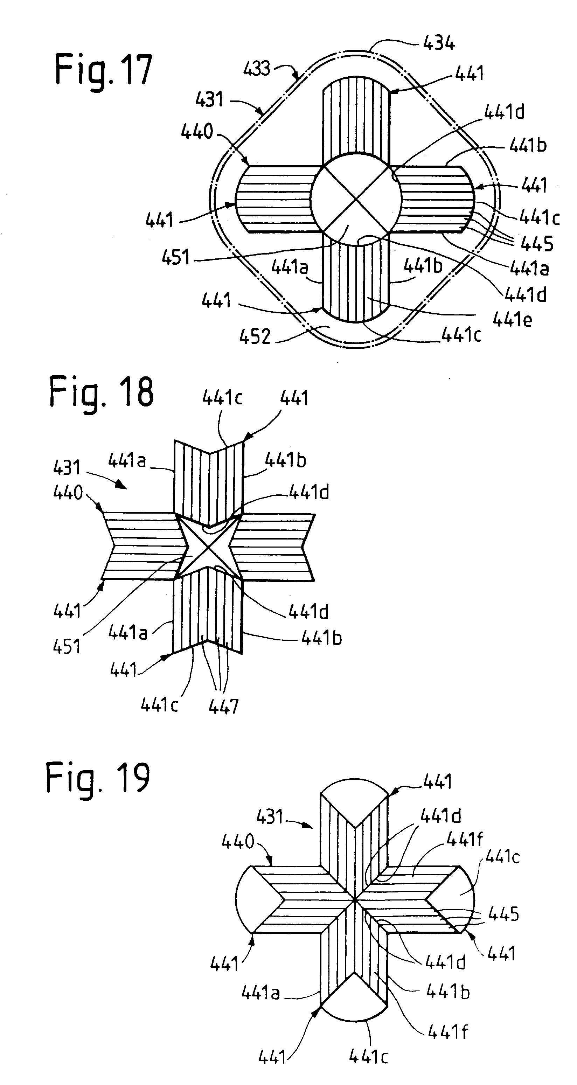

Der schematisch in der Fig. 15 dargestellte Katalysator 431 definiert eine Achse 432 und besitzt ein Gehäuse 433 mit einer metallischen Wandung. Diese weist einen zur Achse 432 parallelen Mantel 434 und an dessen beiden Enden angeordnete, fest und dicht durch Bördel mit diesem verbundene Endwände 435, 436 auf. Der Mantel ist auch in der Fig. 17 angedeutet und hat gemäss dieser im Querschnitt zum Beispiel ungefähr die Form eines Quadrats, dessen Ecken durch abgerundete Übergänge ersetzt sind. Die beiden Endwände 435, 436 sind im wesentlichen eben sowie rechtwinklig zur Achse 432 und besitzen im Zentrum ein Loch. Der Einlass 437 und der Auslass 438 des Katalysators 431 besitzen je einen Stutzen, der aus einem zylindrischen Rohrstück besteht, das Loch der ersten Endwand 435 bzw. der zweiten Endwand 436 durchdringt, in den von der Wandung des Gehäuses umschlossenen Innenraum hineinragt und starr sowie dicht mit der betreffenden Endwand verbunden, nämlich verschweisst ist. Der sich im genannten Innenraum befindende Abschnitt des zum Auslass 438 gehörenden Stutzen bzw. Rohrstücks ist mit über seinen Mantel verteilten Löchern 438a versehen.

Der Katalysator 431 weist im Gehäuse angeordnete auch in den Figuren 16, 17, 18, 19 ersichtliche Katalysatormittel 440 mit vier um die Achse 432 herum verteilten, zusammen ein Kreuz bildenden Katalysator-Körpern 441 auf. Jeder von diesen besitzt zwei ebene, zueinander und zur Achse 432 parallele Seitenflächen 441a bzw. 441b, eine Aussenfläche 441c, eine Innenfläche 441d mit zwei Endflächen 441e bzw. 441f. Die vier Innenflächen 441d bilden zusammen eine die Achse vollständig umschliessende Fläche. Dagegen stehen die Aussenflächen 441c der vier Katalysator-Körper 441 in Abstand voneinander. Die an die Endflächen 441e anstossenden, in den Fig. 15 und 16 ersichtlichen Ränder der Innenflächen 441d bilden zusammen eine in sich geschlossene Linie, nämlich im wesentlichen einen Kreis. Die Aussenflächen 441c und Innenflächen 441d bestehen aus Regelflächen und sind bei jedem Katalysator-Körper 441 in allen zu dessen Seitenflächen 441a, 441b parallelen Schnitten gerade und parallel zueinander. Die Längsränder der vier Aussenflächen 441c und der vier Innenflächen 441d sind zudem parallel zur Achse 432 und liegen paarweise aneinander an. Die restlichen, mittleren Querschnittsbereiche der Aussen- und Innenflächen sind von den Endflächen 441e weg zur Achse hin geneigt, so dass die Innenflächen 441d jedes Katalysator-Körpers 441 bei dessen Endfläche 441f einen V-förmigen Rand hat, der bei jedem V-Schenkel am Rand einer benachbarten Innenfläche 441d anliegt. Die vier Innenflächen 441d laufen dementsprechend bei ihren an die Endflächen 441f anstossenden Rändern zu zwei einander kreuzenden, geraden Linien zusammen.

Jeder Katalysator-Körper 441 weist ein Paket von abwechselnd aufeinander folgenden, ersten und zweiten Blechelementen auf. Die ersten Blechelemente 443 besitzen zum - Teil in den Figuren 15 und 16 angedeutete Wellen. Jedes erste Blechelement 443 definiert zwei sich an seine Wellenscheitel anschmiegende, ebene Schmiegeflächen. Die zweiten Blechelemente sind wiederum im wesentlichen eben. Die Blechelemente sind in einer zu den ebenen Schmiegeflächen der ersten Blechelemente 443 und zu den Oberflächen sowie Schmiegeflächen der zweiten Blechelemente rechtwinkligen Projektion rechteckförmig, so dass also insbesondere die beiden längeren Ränder jedes Blechelementes gerade und parallel zueinander sind. Die Wellen jedes ersten Blechelementes 443 sind gerade, parallel zueinander und rechtwinklig zu den Längsrändern des betreffenden Blechelementes. Die zum gleichen Katalysator-Körper 441 gehörenden Blechelemente sind durch Haltemittel derart starr miteinander verbunden, dass die zweiten, ebenen Blechelemente an den Wellenscheiteln der ersten Blechelemente 443 anliegen. Die Haltemittel können zum Beispiel streifen- oder leistenförmige Distanzelemente 445 aufweisen, die ähnlich wie die Distanzelemente 215 des in der Fig. 4 ersichtlichen Katalysator-Körpers bei den kürzeren Rändern der Blechelemente angeordnet sind und mindestens annähernd parallel zu Wellen des an ihnen anliegenden, ersten Blechelementes 443 verlaufen. Die zum gleichen Katalysator-Körper gehörenden Blechelemente sind jedoch derart gegeneinander verdreht, dass ihre Längsränder zusammen die Aussenfläche 441c und Innenfläche 441d bilden, welche je aus einer gekrümmten Regelfläche bestehen. Die zu ein und demselben Katalysator-Körper 441 gehörenden Blechelemente sind bei ihren kürzeren Rändern miteinander und mit den Distanzelementen verschweisst. Die Endflächen 441e, 441f können aus gekrümmten, sich beim Verdrehen der rechteckförmigen Blechelemente ergebenden Regelflächen bestehen. Die Endflächen 441e sind jedoch in der Fig. 16 zur Vereinfachung als Ebenen dargestellt. Man könnte jedoch die Endflächen 441e und/oder 441f durch eine Nachbearbeitung eben und rechtwinklig zur Achse 432 ausbilden. Die vier Katalysator-Körper 444 sind bei den Längsrändern ihrer Innenflächen 441d und bei den in den Endflächen 441f liegenden Rändern der Innenflächen 441d starr und dicht miteinander verbunden, nämlich verschweisst. Nötigenfalls können noch einige nicht gezeichnete Streben oder dergleichen vorhanden sein, welche die verschiedenen Katalysator-Körper zusätzlich miteinander verbinden. Jeder Katalysator-Körper 441 besitzt eine Gruppe von geraden Durchgängen 447, die von der Innenfläche 441c zur Aussenfläche 441d verlaufen. Alle zum gleichen Katalysator-Körper 441 gehörenden Durchgänge 447 sind parallel zu ein und derselben durch die Achse 432 sowie durch die Mitte des Katalysator-Körpers hindurch verlaufenden Ebene und zu den Seitenflächen 441a, 441b. Die Durchgänge 447 sind ferner rechtwinklig zu den Längsrändern der sie begrenzenden, ersten Blechelemente. Die zum gleichen Katalysator-Körper 441 gehörenden Durchgänge 447 haben also verschiedene Richtungen, die analog wie bei dem in den Figuren 7 bis 9 gezeichneten Katalysator 261 vom Abstand von der durch die Achse 432 und durch die Mitte des Katalysator-Körpers 441 hindurch verlaufenden Ebene abhängig sind. Es sei noch angemerkt, dass jeder Katalysator-Körper 441 im Vergleich zu seinen Aussenabmessungen in Wirklichkeit viel mehr Blechelemente besitzt als in den Figuren 16 bis 20 gezeichnet sind.

Die Katalysatormittel 440 sind bei den Endflächen 441e, 441f starr mit den sich im Innenraum des Gehäuses 433 befindenden Enden der Stutzen verbunden, welche den Einlass 437 bzw. den Auslass 438 bilden. Die Katalysatormittel 440 stehen allseitig in Abstand von der Wandung des Gehäuses 433. Der den Einlass 437 bildende Stutzen mündet an seinem dicht mit den vier Katalysator-Körpern 441 verbundenen Ende in den von den Innenflächen 441d umschlossenen, inneren Hohlraum 451. Die zu den vier Katalyxsator-Körpern 441 gehörenden Durchgänge 447 verlaufen entsprechend der Anordnung der Katalysator-Körper auf vier verschiedene, gleichmässig um die Achse 432 herum verteilte Seiten des inneren Hohlraums 451 von diesem weg. Der Innendurchmesser des Einlasses 437 und insbesondere von dessen mit den Katalysatormitteln 440 verbundenen Ende ist ungefähr und vorzugsweise genau gleich dem Durchmesser des Kreises, der von den in den Endflächen 441e liegenden Rändern der Innenflächen 441d gebildet ist, so dass sich der innere Hohlraum 451 stufenlos an den Innenraum des Einlasses anschliesst. Der innere Hohlraum 451 ist vollständig frei, enthält also kein den Begrenzungselementen 250, 380, 420 entsprechendes Begrenzungselement und hat eine entlang der Achse 432 vom Einlass weg linear abnehmende Querschnittsfläche. Zwischen dem Mantel 434 und den Flächen 441a, 441b, 441c der Katalysator-Körper 441 ist ein äusserer Hohlraum 452 vorhanden, der durch die Löcher 438a des Stutzens des Auslasses 438 mit dessen Innenraum verbunden ist.

Der Katalysator 431 kann in eine Auspuff-Einrichtung eines Verbrennungsmotors eingebaut werden. Bei dessen Betrieb strömt dann in der Fig. 15 durch Pfeile veranschaulichtes Abgas durch den Einlass 437 in den inneren Hohlraum 451. Das Abgas wird in diesem umgelenkt sowie auf die Durchgänge 447 verteilt und strömt dann durch die Durchgänge 447, wobei es katalytisch behandelt wird. Das Abgas gelangt dann in den äusseren Hohlraum 452 und strömt in diesem zum Auslass 438, wobei auch ein Teil des Abgases zwischen den Seitenflächen 441a, 441b von einander benachbarten Katalysator-Körpern 441 hindurch strömen kann. Das Abgas strömt danach durch die Löcher 438a in den Innenraum des Auslasses 438 und verlässt durch diesen den Innenraum des Gehäuses 433.

Der in den Figuren 15 bis 19 dargestellte Katalysator besitzt verschiedene Vorteile, die zum Teil bereits in der Einleitung und/oder in bezug auf die in den Figuren 1 bis 14 dargestellten Katalysatoren beschrieben wurden, und vereinigt diese Vorteile in besonders günstiger Weise. Der Katalysator 431 hat zum Beispiel rechtwinklig zur Achse 432 im Vergleich zur pro Zeiteinheit zu behandelnden Abgasmenge nur relativ kleine Querschnittsabmessungen. Ferner können die in den Katalysator-Körpern 441 vorhandenen Durchgänge 447 kleine Querschnittsflächen haben und nahe beieinander sein. Jeder Katalysator-Körper 441 kann daher eine grosse Anzahl Durchgänge pro Flächeneinheit seiner zu den Durchgängen 447 rechtwinklige Aussenfläche 441c oder Innenfläche 441d oder einer zu diesen Flächen parallelen, gebogenen Schnittfläche oder auch pro Flächeneinheit einer, ebenen, zu mindestens einigen Durchgängen rechtwinkligen Schnittfläche haben. Dies ermöglicht wiederum, einen hohen Wirkungsgrad zu erzielen, die Durchgänge relativ kurz auszubilden und das Volumen, das Gewicht sowie den Edelmetallbedarf der Katalysatormittel niedrig zu halten. Dadurch, dass die Durchgänge 447 im Vergleich zur Menge des zu behandelnden Abgases und im Vergleich zur axialen Ausdehnung der Katalysatormittel sowie zur Länge der Innenflächen 441d relativ kurz sind, kann der von den Katalysatormitteln 440 beim Betrieb erzeugte Druckabfall trotz der kleinen Querschnittsfläche der Durchgänge klein gehalten werden. Die linear vom Einlass 437 weg abnehmende Querschnittsfläche des inneren Hohlraums 451 ergibt eine gleichmässige Verteilung des Abgases auf die verschiedenen Durchgänge und trägt dazu bei, dass das Abgas weitgehend turbulenzlos und mit kleinem Druckverlust umgelenkt und auf die verschiedenen Durchgänge 447 verteilt wird. Da der Einlass 437 und der innere Hohlraum 451 eine gemeinsame gerade Achse 432 haben und das Abgas im wesentlichen gerade - d.h. ohne Umlenkung - aus dem Einlass in den inneren Hohlraum 451 strömt, ergibt sich zwischen dem Einlass und den von den vier Innenflächen 441d gebildeten Abgas-Eintrittsflächen der Katalysatormittel 440 nur ein kleiner Druckverlust. Des weiteren entsteht auch zwischen den als Abgas-Austrittsflächen der Katalysatormittel dienenden Aussenflächen 441c und dem Auslass 438 nur ein geringer Druckverlust. Der Katalysator verursacht daher insgesamt nur einen kleinen Druckverlust. Da das Abgas durch den Einlass ohne Kontakt mit der Wandung des Gehäuses direkt in den inneren Hohlraum 451 der Katalysatormittel 440 gelangt und da diese nirgends direkt an der Wandung des Gehäuses anliegen, werden die Katalysatormittel 440 bei einem Kalt-Start rasch auf die für eine katalytische Behandlung des Abgases benötigte Temperatur erwärmt. Dabei ist es auch von Vorteil, dass im inneren Hohlraum 451 kein den Begrenungselementen 250, 380, 420 entsprechendes Begrenzungselement vorhanden ist, das bei einem Kalt-Start ebenfalls erwärmt werden müsste. Die Katalysatormittel 440 sind auch stabil sowie robust und können wirtschaftlich hergestellt und kostengünstig in ein Gehäuse eingebaut werden. Die Tatsache, dass die Katalysatormittel in das metallische Gehäuse eingebaut werden können, ohne dass zwischen der Wandung des Gehäuses und den Katalysatormitteln noch eine besondere wärme- und/oder schallisolierende Zwischenlage angeordnet werden muss, trägt ebenfalls zu einer kostengünstigen Herstellbarkeit bei.

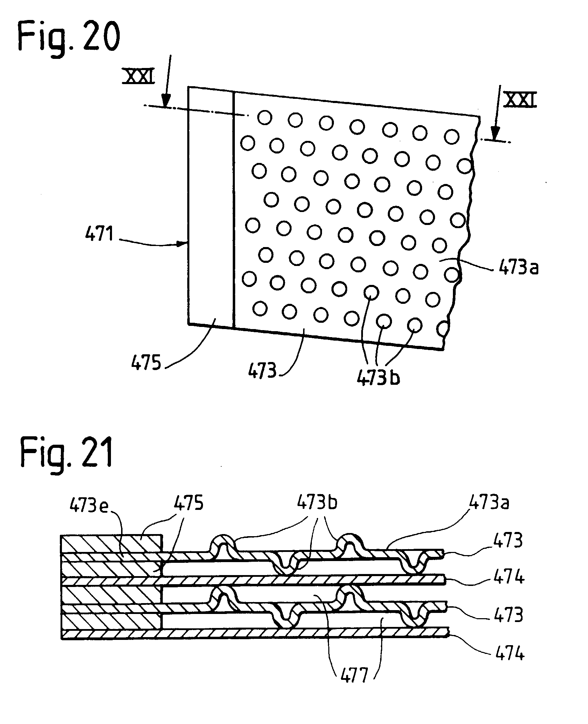

Der zum Teil in den Fig. 20 und 21 ersichtliche Katalysator-Körper 471 kann zum Beispiel eine ähnliche Umrissform haben wie die in den Fig. 1 bis 4 ersichtlichen Katalysator-Körper 211 und also ein Prisma bilden, dessen Grundfläche aus einem schiefwinkligen Parallelogramm besteht. Der Katalysator-Körper 471 besitzt ein Paket von abwechselnd aufeinander folgenden, ersten Blechelementen 473 und zweiten Blechelementen 474, welche die gleiche Umrissform haben wie die Grundfläche des Prismas. Jedes erste Blechelement 473 hat einen Hauptabschnitt 473a mit Erhöhungen, die aus gleichmässig über den Hauptabschnitt 473a verteilten Buckeln 473b bestehen, von denen mindestens die meisten in Abstand von den Rändern des Blechelementes 473 stehen und durch in sich geschlossene, beispielsweise kreisförmige Umrisslinien begrenzt sind. In dem in der Fig. 21 gezeichneten Schnitt folgen abwechselnd nach oben und nach unten ragende Buckel 473b aufeinander. Jedes erste Blechelement 473 hat also in einander abgewandten Richtungen von einer Mittelebene des ersten Blechelementes und von den sich zwischen benachbarten Buckeln befindenden Bereichen des ersten Blechelementes wegragende Buckel 473b. Jedes erste Blechelement 473 hat ferner zum Beispiel zwei ebene, bei seinen kürzeren Rändern angeordnete Halteabschnitte 473e. Die zweiten Blechelemente 474 sind im wesentlichen eben. Die Blechelemente 473, 474 sind durch Haltemittel zusammengehalten, die zum Beispiel zwischen den Halteabschnitten 473e und den diesen gegenüberstehenden Halteabschnitten der zweiten Blechelemente 474 angeordnete, mit den Blechelementen verschweisste Distanzelementes 475 aufweisen. Der Katalysator-Körper 471 besitzt eine Gruppe von Durchgängen 477 die von den einen zu den anderen Längsrändern der Blechelemente verlaufen.

Man kann zwei gemäss den Fig. 20, 21 ausgebildete Katalysator-Körper 471 analog wie die Katalysator-Körper 211 derart in einem Gehäuse eines Katalysators anordnen, dass sie zusammen V-förmige Katalysatormittel bilden. Es besteht jedoch auch bei allen anderen, in den Fig. 5 bis 18 gezeichneten Katalysator-Körpern die Möglichkeit, die ersten Blechelemente statt mit Wellen mit den Buckeln 473b entsprechende Buckeln zu versehen.

Die Katalysatoren können noch in anderer Hinsicht geändert werden.

Beispielsweise könnten die zur Achse parallelen, ersten Seiten- und/oder Längswände 204a, 264a des Gehäuses 203 bzw. 263 durch Seiten- oder Längswände ersetzt werden, die sich vom Einlass weg einander und der Achse nähern.

Ferner kann man Merkmale von verschiedenen in den Figuren gezeichneten Katalysatoren auf manigfaltige Arten miteinander kombinieren. Zum Beispiel können die ebenen, ersten Seiten- und/oder Längswände 204a in den Fig. 1 bis 3 ersichtlichen Katalysators 201 durch im Querschnitt gebogene Seiten- und/oder Längswände ersetzen, wie sie zum Beispiel bei den in den Fig. 7 bis 12 ersichtlichen Katalysatoren vorhanden sind.

Des weiteren können die Durchgänge der in den Fig. 1 bis 6, 11, 12, 13, 14 gezeichneten Katalysatoren durch Durchgänge ersetzt werden, die mit zur Achse rechtwinkligen Ebenen einen Winkel bilden, der vorzugsweise höchstens 45° und beispielsweise höchstens 30° beträgt.

Die Aussen- und Innenflächen der Katalysator-Körper der in den Figuren 13 und 14 ersichtlichen Katalysatoren könnten im Querschnitt eben statt gebogen sein. Die inneren Hohlräume 381 bzw. 421 sind dann im Querschnitt im wesentlichen polygonförmig, d.h. dreieck- bzw. viereckförmig, statt kreisförmig. Die in die inneren Hohlräume mündenden Mündungsöffnungen der Einlässe sollen dann dementsprechend im Querschnitt dreieckförmig bzw. viereckförmig, statt kreisförmig sein und die gleichen Querschnittsabmessungen wie die inneren Hohlräume haben. Die paraboloidförmigen Begrenzungselemente 380 bzw. 420 dieser Katalysatoren könnten dann eventuell durch einen ungefähr dreikant- bzw. vierkantförmigen Brenzungskörper ersetzt werden, so dass die Querschnittsfläche des freien Bereichs des inneren Hohlraums wieder mindestens annähernd linear und vorzugsweise genau linear mit dem Abstand vom Einlass abnimmt.

Beim Katalysator gemäss der Fig. 13 könnte man das Begrenzungselement 380 weglassen und die drei Katalysator-Körper dafür mit Aussen- und Innenflächen versehen, die sich vom Einlass weg analog wie bei den Katalysatoren gemäss den Fig. 7 bis 9 und 15 bis 19 an die Achse und aneinander annähern.

Bei dem in der Fig. 15 ersichtlichen Katalysator könnte man eventuell den Einlass 437 bildenden, aus einem zylindrischen Rohrstück bestehenden Stutzen durch einen Stutzen ersetzen, der sich mindestens zum Teil zu den Katalysatormitteln hin konisch erweitert. Ferner könnte man möglicherweise den in der Fig. 15 ersichtlichen Auslass 438 so ändern, dass sein den Katalysatormitteln zugewandtes Ende analog wie bei den in den Figuren 1, 2, 5, 7, 11 ersichtlichen Auslässen nur bis zur zweiten Endwand 436 reicht und also nicht in den Innenraum des Gehäuses 433 hineinragt. Die Katalysatormittel 440 würden dann nur am Einlass 437 und nicht am Auslass befestigt. Nötigenfalls könnte man dafür das dem Auslass zugewandte Ende der Katalysatormittel 440 durch einige aus Bolzen oder dergleichen bestehende, um die Achse 432 herum verteilte Verbindungselemente mit dem Mantel 434 und/oder der zweiten Endwand 436 verbinden.

Bei den in den Figuren 1 bis 14 ersichtlichen Katalysatoren und/oder Katalysatormitteln könnte man - analog wie es für den Katalysator 431 in der Fig. 15 dargestellt ist - den Einlass sowie eventuell den Auslass mit einem in den Innenraum des Gehäuses ragenden Rohrstück oder Stutzen versehen und die Katalysatormittel derart an diesen Rohrstücken oder Stutzen befestigen, dass sie in Abstand von beiden Endwänden und beispielsweise auch vom Mantel des Gehäuses stehen.

Ferner können eventuell noch mehr als vier Katalysator-Körper mit je einer Gruppe von Durchgängen vorgesehen und analog wie bei den Katalysatoren gemäss den Figuren 7 bis 19 um eine Achse herum verteilt werden, so dass sie zusammen einen inneren Hohlraum umschliessen.

Die Schweissverbindungen, welche die Blech- und Distanzelemente der Katalysator-Körper miteinander verbinden, können durch Hartlötverbindungen oder eventuell bei gewissen Varianten durch Klemmverbindungen ersetzt werden. Die Haltemittel können zur Erzeugung von Klemmverbindungen dann noch Bolzen aufweisen, welche die Blech- und Distanzelemente - durchdringen. Eventuell kann man sogar Haltemittel - zum Beispiel Bolzen und Distanzringe - vorsehen, die einige Abgas-Durchgänge der Katalysatormittel kreuzen und/oder unterteilen. Diese von Elementen der Haltemittel gekreuzten Durchgänge können dann eventuell ein wenig kürzer als die anderen Durchgänge sein.

Bei den anhand der Figuren 1 bis 19 beschriebenen Katalysatormitteln sind die durch die Blechelemente definierten, sich an deren Flächen anschmiegenden Schmiegeebenen und auch die ebenen Blechelemente selbst parallel zur Achse der Katalysatoren und Katalysatormittel. Man könnte jedoch die Blechelemente mindestens bei den ebene Innen- sowie Aussenflächen aufweisenden Katalysator-Körpern derart anordnen, dass die durch die Blechelemente definierten, sich an diese anschmiegenden Schmiegeebenen und die ebenen Blechelemente selbst mit der Achse der Katalysatoren und Katalysatormittel einen Winkel bilden und zum Beispiel bei gemäss den Figuren 1 bis 3 V-förmig angeordneten Katalysator-Körpern rechtwinklig zu den Wänden 204b des Gehäuses sowie entweder rechtwinklig zur Achse 202 oder rechtwinklig zu den Innenflächen 211d sowie Aussenflächen 211c sind. Die Wellen können dann wie bei den gezeichneten Katalysator-Körpern parallel zu den Wänden 204b vom inneren Hohlraum 221 zum äusseren Hohlraum 222 verlaufen.

## Patentansprüche

1. Katalysator für die katalytische Behandlung von Abgas, mit einem Gehäuse (203, 233, 263, 293, 303, 363, 403, 433) und in diesem angeordneten Katalysatormitteln (210, 240, 270, 295, 310, 370, 410, 440), wobei das Gehäuse (203, 233, 293, 303, 363, 403, 433) einen Mantel (204, 234, 264, 294, 304, 364, 404, 434) hat, wobei ein sich mindestens zum Teil zwischen Bereichen der Katalysatormittel (210, 240, 270, 295, 310, 370, 410, 440) befindender, innerer Hohlraum (221, 251, 281, 321, 381, 421, 451) und ein sich zwischen den Katalysatormitteln (210, 240 270, 295, 310, 370, 410, 440) und mindestens einem Teil des Gehäuses (203, 233, 263, 293, 303, 363, 403, 433), befindender, äusserer Hohlraum (222, 252, 282, 322, 382, 422, 452) vorhanden sind, wobei die Katalysatormittel (210, 240, 270, 295, 310, 370, 410, 440) mindestens zwei Katalysator-Körper (211, 241, 271, 311, 371, 411, 441, 471) mit Durchgängen (217, 247, 277, 317, 377, 417, 447, 477) aufweisen, die auf verschiedene Seiten des inneren Hohlraums (221, 251, 281, 321, 381, 421, 451) von diesem weg zum äusseren Hohlraum (222, 252, 282, 322, 382, 422, 452) führen, und wobei der innere Hohlraum (221, 251, 281, 321, 351, 381, 421, 451) mindestens einen an die Katalysatormittel (210, 240, 270, 295, 310, 340, 370, 410, 440) angrenzenden, freien Bereich aufweist, dessen Querschnittsfläche von einem Einlass (207, 237, 267, 307, 437) weg abnimmt, dadurch gekennzeichnet, dass das Gehäuse (203, 233, 263, 293, 303, 363, 403, 433) eine erste, mit dem Einlass (207, 237, 267, 437) versehene Endwand (205, 235, 265, 305, 435) und eine zweite, mit einem Auslass (208, 238, 268, 438) versehene Endwand (206, 236, 266, 306, 436) hat, dass der Einlass (207, 237, 267, 307, 437) einen die erste Endwand (205, 235, 265, 305, 435) durchdringenden, bei einer Mündung in den inneren Hohlraum (221, 251, 281, 321, 381, 421, 451) mündenden Innenraum hat, der bei seiner Mündung im wesentlichen die gleiche Querschnittsform und im wesentlichen die gleichen Querschnittsabmessungen hat wie der innere Hohlraum (221, 251, 281, 321, 351, 381, 421, 451), dass jeder Katalysator-Körper (211, 241, 271, 311, 371, 411, 441, 471) ein Paket von Blechelementen (213, 214, 443, 473, 474) aufweist, dass mindestens ein Blechelement (213, 443, 473) von jedem Paar einander benachbarter Blechelemente (213, 214, 443, 473, 474) Erhöhungen aufweist und dass die zum gleichen Paket gehörenden Blechelemente (213, 214, 443, 473, 474) sich an diese anschmiegende, zueinander parallele Schmiegeebenen definieren.

2. Katalysator nach Anspruch 1, dadurch gekennzeichnet, dass der Innenraum des Einlasses (207, 237, 267, 437) einen sich bis zur genannten Mündung erstreckenden und diese bildenden Abschnitt hat, dessen Querschnittsfläche zur Mündung hin grösser wird oder konstant ist.

3. Katalysator nach einem der Ansprüche 1 oder 2, dadurch gekennzeichnet, dass jedes Paket abwechselnd aufeinanderfolgende, erste, Erhöhungen aufweisende Blechelemente (213, 443, 473) und zweite, ebene Blechelemente (214, 474) aufweist, dass die Erhöhungen durch Wellen (213b) gebildet sind und dass die zu ein und demselben Blechelement (213, 443) gehörenden Wellen (213b) parallel zueinander sind.

4. Katalysator nach Anspruch 3, dadurch gekennzeichnet, dass die zum gleichen Paket gehörenden, einander benachbarten Blechelemente (213, 214, 443, 473, 474) sich bei Scheiteln der Wellen (213b) berühren.

5. Katalysator nach einem der Ansprüche 1 bis 4, dadurch gekennzeichnet, dass jedes Blechelement (213, 214, 443, 473, 474) in einer Projektion, die zu einer sich an das betreffende Blechelement (213, 214, 443, 473, 474) anschmiegenden Schmiegeebene rechtwinklig ist, zwei gerade, zueinander parallele Ränder hat.

6. Katalysator nach Anspruch 5, dadurch gekennzeichnet, dass jedes Blechelement (213, 214, 443, 473, 474) in der genannten Projektion viereckförmig ist und noch zwei andere, gerade, zueinander parallele Ränder hat.

7. Katalysator nach einem der Ansprüche 1 bis 6, dadurch gekennzeichnet, dass die verschiedenen Katalysator-Körper (271, 311, 371, 411, 441) an den inneren Hohlraum (281, 321, 381, 421, 451) angrenzende Innenflächen (271d, 311d, 371d, 411d, 441d) haben, die den inneren Hohlraum (281, 321, 381, 421, 451) im Querschnitt zusammen im wesentlichen vollständig und lückenlos umschliessen.

8. Katalysator nach einem der Ansprüche 1 bis 7, dadurch gekennzeichnet, dass jeder Katalysator-Körper (211, 241, 271, 311, 371, 411, 441, 471) eine an den äusseren Hohlraum (222, 252, 282, 322, 382, 422, 452) angrenzende Aussenfläche (211c, 241c, 271c, 311c, 371c, 411c, 441c) besitzt, dass die Durchgänge (217, 247, 277, 317, 377, 417, 447, 477) in der Aussenfläche (211c, 241c, 271c, 311c, 371c, 411c, 441c) liegende Mündungen haben und dass zwischen dem Mantel (204, 234, 264, 294, 304, 364, 404, 434) und den ganzen Aussenflächen (211c, 241c, 271c, 311c, 371c, 411c, 441c) zum äusseren Hohlraum (222, 252, 282, 322, 382, 422, 452) gehörende Zwischenräume vorhanden sind.

9. Katalysator nach einem der Ansprüche 1 bis 8, dadurch gekennzeichnet, dass zwischen dem Mantel (294, 364, 434) und den Katalysatormitteln (295, 370, 440) ein diese im Querschnitt vollständig umschliessender, zum äusseren Hohlraum (297, 382, 452) gehörender Zwischenraum vorhanden ist.

10. Katalysator nach einem der Ansprüche 1 bis 9, dadurch gekennzeichnet, dass die Katalysatormittel (370, 410, 440) mindestens drei an den inneren Hohlraum (381, 421, 451) angrenzende Katalysator-Körper (371, 441) aufweisen.

11. Katalysator nach einem der Ansprüche 1 bis 10, dadurch gekennzeichnet, dass die Querschnittsfläche des bzw. jedes freien Bereichs des inneren Hohlraums (221, 251, 281, 321, 351, 421, 451) im wesentlichen entlang seiner ganzen vom Einlass (207, 237, 267, 307, 437) weg verlaufenden Abmessung im wesentlichen linear mit dem Abstand vom Einlass (207, 237, 267, 307, 437) abnimmt.

12. Katalysator nach einem der Ansprüche 1 bis 11, dadurch gekennzeichnet, dass der Innenraum des Einlasses (207, 237) und der innere Hohlraum (221, 251) bei der in den letzteren mündenden Mündung des Innenraums des Einlasses (207, 237) im Querschnitt ein Polygon, bilden und dass der Einlass (207, 237) einen im Querschnitt kreisförmigen, beispielsweise zylindrischen Abschnitt und einen diesen mit der polygonförmigen Mündung verbindenden Abschnitt hat.

13. Katalysator nach Anspruch 12, dadurch gekennzeichnet, dass jedes Paket von Blechelementen (213, 214) eine an den inneren Hohlraum (221, 251) angrenzende, ebene Innenfläche (211d, 242d) und eine ebene, zu dieser parallele Aussenfläche (211c, 241c) hat und dass die Mündung des Einlasses (207, 237) viereckförmig ist.

14. Katalysator nach einem der Ansprüche 1 bis 11, dadurch gekennzeichnet, dass der Innenraum des Einlasses (267, 307, 437) und der innere Hohlraum (281, 321, 381, 421, 451) bei der in den letzteren mündende Mündung des Einlasses (267, 307, 437) im Querschnitt kreisförmig sind.

15. Katalysator nach einem der Ansprüche 1 bis 14, dadurch gekennzeichnet, dass die verschiedenen Pakete an den inneren Hohlraum (221, 281, 451) angrenzende sich in vom Einlass (207, 267, 437) wegverlaufender Richtung aneinander annähernde Innenflächen (211d, 271d, 441d) haben.

16. Katalysator nach einem der Ansprüche 1 bis 14, dadurch gekennzeichnet, dass die Katalysatormittel (240, 310, 370, 410) eine Achse (232, 302, 362, 402) definieren, dass die Pakete zu dieser parallele, an den inneren Hohlraum (251, 321, 381, 421) angrenzende Innenflächen (241d, 311d, 371d, 411d) haben, dass im inneren Hohlraum (251, 321, 381, 421) ein Begrenzungselement (250, 320, 380, 420) angeordnet ist und zusammen mit den ihm gegenüberstehenden Innenflächen (241d, 311d, 371d, 411d) mindestens einen freien Bereich des inneren Hohlraums (251, 321, 381, 421) begrenzt und dass das Begrenzungselement (250, 320, 380, 420) sich vom Einlass (237, 307) weg an die Innenfläche (241d, 311d, 371d, 411d) annähert.

17. Katalysator nach einem der Ansprüche 1 bis 16, dadurch gekennzeichnet, dass der Einlass (437) einen starr und dicht mit der ersten Endwand (435) verbundenen Stutzen aufweist, der in einen vom Gehäuse (433) umschlossenen Innenraum ragt, und dass die Katalysatormittel (440) am Stutzen befestigt sind und allseitig in Abstand von der Wandung des Gehäuses (433) stehen.

18. Katalysator nach eine der Ansprüche 1 bis 16, dadurch gekennzeichnet, dass die Katalysatormittel (210, 240, 270, 295, 310, 370, 410) an die erste Endwand (205, 235, 265, 305) anstossen und fest sowie dicht mit dieser verbunden sind.

19. Katalysator nach einem der Ansprüche 1 bis 18, dadurch gekennzeichnet, dass die Blechelemente (213, 214, 443, 473, 474) Überzüge mit katalytisch aktivem Material aufweisen und dass jedes Blechelement (213, 214, 443, 473, 474) mindestens einen ebenen Halteabschnitt (213e, 213f, 214e, 214f, 473e) aufweist, der an einem ebenen Halteabschnitt (213e, 213f, 214e, 214f, 473e) eines anderen Blechelementes (213, 214, 443, 473, 474) und/oder an einem Element (215, 475) von Haltemitteln anliegt, und dass die aneinander anliegenden Halteabschnitte (213e, 213f, 214e, 214f, 473e) und Elemente (215, 475) starr miteinander verbunden sind.

## Claims

1. Catalytic converter for the catalytic treatment of exhaust gas, comprising a housing (203, 233, 263, 293, 303, 363, 403, 433) and catalyst means (210, 240, 270, 295, 310, 370, 410, 440) arranged therein, the housing (203, 233, 293, 303, 363, 403, 433) having a casing (204, 234, 264, 294, 304, 364, 404, 434), an inner cavity (221, 251, 281, 321, 381, 421, 451) located at least partly between regions of the catalyst means (210, 240, 270, 295, 310, 370, 410, 440) and an outer cavity (222, 252, 282, 322, 382, 422, 452) located between the catalyst means (210, 240, 270, 295, 310, 370, 410, 440) and at least a part of the housing (203, 233, 263, 293, 303, 363, 403, 433) being present, the catalyst means (210, 240, 270, 295, 310, 370, 410, 440) having at least two catalyst supports (211, 241, 271, 311, 371, 411, 441, 471) with passages (217, 247, 277, 317, 377, 417, 447, 477) which lead, on different sides of the inner cavity (221, 251, 281, 321, 381, 421, 451), away from the latter towards the outer cavity (222, 252, 282, 322, 382, 422, 452), and the inner cavity (221, 251, 281, 321, 351, 381, 421, 451) having at least one free region which borders the catalyst means (210, 240, 270, 295, 310, 340, 370, 410, 440) and whose cross-sectional area decreases in a direction away from an inlet (207, 237, 267, 307, 437), characterized in that the housing (203, 233, 263, 293, 303, 363, 403, 433) has a first end wall (205, 235, 265, 305, 435) provided with the inlet (207, 237, 267, 437) and a second end wall (206, 236, 266, 306, 436) provided with an outlet (208, 238, 268, 438), that the inlet (207, 237, 267, 307, 437) has an inner space which passes through the first end wall (205, 235, 265, 305, 435), leads into the inner cavity (221, 251, 281, 321, 381, 421, 451) at an orifice and, at its orifice, has essentially the same cross-sectional shape and essentially the same cross-sectional dimensions as the inner cavity (221, 251, 281, 321, 351, 381, 421, 451), that each catalyst support (211, 241, 271, 311, 371, 411, 441, 471) has a packet of sheet metal members (213, 214, 443, 473, 474), that at least one sheet metal member (213, 243, 273) of each pair of sheet metal members (213, 214, 443, 473, 474) adjacent to one another has protuberances and that the sheet metal members (213, 214, 443, 473, 474) belonging to the same packet define osculating planes moulding to said sheet metal members and parallel to one another.

2. Catalytic converter according to Claim 1, characterized in that the inner space of the inlet (207, 237, 267, 437) has a section which extends up to the stated orifice and forms the latter and whose cross-sectional area increases towards the orifice or is constant.

3. Catalytic converter according to any of Claims 1 or 2, characterized in that each packet has alternating first sheet metal members (213, 443, 473) having protuberances and second, flat sheet metal members (214, 474), that the protuberances are formed by waves (213b) and that the waves (213b) belonging to one and the same sheet metal member (213, 443) are parallel to one another.

4. Catalytic converter according to Claim 3, characterized in that the sheet metal members (213, 214, 443, 473, 474) belonging to the same packet and adjacent to one another come into contact with one another at summits of the waves (213b).

5. Catalytic converter according to any of Claims 1 to 4, characterized in that, in a projection at right angles to an osculating plane moulding to the relevant sheet metal member (213, 214, 443, 473, 474), each sheet metal member (213, 214, 443, 473, 474) has two straight edges parallel to one another.

6. Catalytic converter according to Claim 5, characterized in that, in the stated projection, each sheet metal member (213, 214, 443, 473, 474) is quadrilateral and also has two other straight edges parallel to one another.

7. Catalytic converter according to any of Claims 1 to 6, characterized in that the various catalyst supports (271, 311, 371, 411, 441) have inner surfaces (271d, 311d, 371d, 411d, 441d) which border the inner cavity (281, 321, 381, 421, 451) and together, in cross-section, enclose the inner cavity (281, 321, 381, 421, 451) essentially completely and without gaps.

8. Catalytic converter according to any of Claims 1 to 7, characterized in that each catalyst support (211, 241, 271, 311, 371, 411, 441, 471) has an outer surface (211c, 241c, 271c, 311c, 371c, 411c, 441c) bordering the outer cavity (222, 252, 282, 322, 382, 422, 452), that the passages (217, 247, 277, 317, 377, 417, 447, 477) have orifices lying in the outer surface (211c, 241c, 271c, 311c, 371c, 411c, 441c) and that intermediate spaces belonging to the outer cavity (222, 252, 282, 322, 382, 422, 452) are present between the casing (204, 234, 264, 294, 304, 364, 404, 434) and the entire outer surfaces (211c, 241c, 271c, 311c, 371c, 411c, 441c).

9. Catalytic converter according to any of Claims 1 to 8, characterized in that an intermediate space completely enclosing the catalyst means (295, 370, 440) in cross-section and belonging to the outer cavity (297, 382, 452) is present between the casing (294, 364, 434) and said catalyst means.

10. Catalytic converter according to any of Claims 1 to 9, characterized in that the catalyst means (370, 410, 440) have at least three catalyst supports (371, 441) bordering the inner cavity (381, 421, 451).

11. Catalytic converter according to any of Claims 1 to 10, characterized in that the cross-sectional area of the or each free region of the inner cavity (221, 251, 281, 321, 351, 421, 451) decreases essentially linearly with the distance from the inlet (207, 237, 267, 307, 437), essentially along its entire dimension extending away from the inlet (207, 237, 267, 307, 437).

12. Catalytic converter according to any of Claims 1 to 11, characterized in that the inner space of the inlet (207, 237) and the inner cavity (221, 251) form a polygon in cross-section at that orifice of the inner space of the inlet (207, 237) which leads into said inner cavity, and that the inlet (207, 237) has a section which is circular, for example cylindrical, in cross-section and a section connecting the latter to the polygonal orifice.

13. Catalytic converter according to Claim 12, characterized in that each packet of sheet metal members (213, 214) has a flat inner surface (211d, 242d) bordering the inner cavity (221, 251) and a flat outer surface (211c, 241c) parallel to said inner surface and that the orifice of the inlet (207, 237) is quadrilateral.

14. Catalytic converter according to any of Claims 1 to 11, characterized in that the inner space of the inlet (267, 307, 437) and the inner cavity (281, 321, 381, 421, 451) are circular in cross-section at that orifice of the inlet (267, 307, 437) which leads into said inner cavity.

15. Catalytic converter according to any of Claims 1 to 14, characterized in that various packets have inner surfaces (211d, 271d, 441d) which border the inner cavity (221, 281, 451) and approach one another in a direction away from the inlet (207, 267, 437).

16. Catalytic converter according to any of Claims 1 to 14, characterized in that the catalyst means (240, 310, 370, 410) define an axis (232, 302, 362, 402), that the packets have inner surfaces (241d, 311d, 371d, 411d) parallel to said axis and bordering the inner cavity (251, 321, 381, 421), that a bounding member (250, 320, 380, 420) is arranged in the inner cavity (251, 321, 381, 421) and, together with the inner surfaces (241d, 311d, 371d, 411d) opposite it, bounds at least one free region of the inner cavity (251, 321, 381, 421) and that the bounding member (250, 320, 380, 420) approaches the inner surface (241d, 311d, 371d, 411d) in a direction away from the inlet (237, 307).

17. Catalytic converter according to any of Claims 1 to 16, characterized in that the inlet (437) has a socket which is rigidly and tightly connected to the first end wall (435) and projects into an inner space enclosed by the housing (433), and that the catalyst means (440) are fastened to the socket and are a distance away from the wall of the housing (433) all around.

18. Catalytic converter according to any of Claims 1 to 16, characterized in that the catalyst means (210, 240, 270, 295, 310, 370, 410) abut the first end wall (205, 235, 265, 305) and are firmly and tightly connected thereto.

19. Catalytic converter according to any of Claims 1 to 18, characterized in that the sheet metal members (213, 214, 443, 473, 474) have coatings containing catalytically active material and that each sheet metal member (213, 214, 443, 473, 474) has at least one flat retaining section (213e, 213f, 214e, 214f, 473e) which is adjacent to a flat retaining section (213e, 213f, 214e, 214f, 473e) of another sheet metal member (213, 214, 443, 473, 474) and/or to a member (215, 475) of retaining means, and that the retaining sections (213e, 213f, 214e, 214f, 473e) and members (215, 475) adjacent to one another are rigidly connected to one another.

## Revendications

1. Pot catalytique pour le traitement catalytique de gaz d'échappement, comportant un boîtier (203, 233, 263, 293, 303, 363, 403, 433) et des moyens de catalyse (210, 240, 270, 295, 310, 370, 410, 440), disposés dans ce dernier, le boîtier (203, 233, 293, 303, 363, 403, 433) présentant une enveloppe (204, 234, 264, 294, 304, 364, 404, 434), tandis qu'un espace vide interne (221, 251, 281, 321, 381, 421, 451) situé au moins en partie entre des régions des moyens de catalyse (210, 240, 270, 295, 310, 370, 410, 440) et un espace vide externe (222, 252, 282, 322, 382, 422, 452) situé entre les moyens de catalyse (210, 240, 270, 295, 310, 370, 410, 440) et au moins une partie du boîtier (203, 233, 263, 293, 303, 363, 403, 433) sont prévus, les moyens de catalyse (210, 240, 270, 295, 310, 370, 410, 440) présentant au moins deux corps de catalyse (211, 241, 271, 311, 371, 411, 441, 471) dotés de passages (217, 247, 277, 317, 377, 417, 447, 477) qui, sur des côtés différents de l'espace vide interne (221, 251, 281, 321, 381, 421, 451), partent de celui-ci en direction de l'espace vide externe (222, 252, 282, 322, 382, 422, 452), et l'espace vide interne (221, 251, 281, 321, 351, 381, 421, 451) présente au moins une zone libre adjacente aux moyens de catalyse (210, 240, 270, 295, 310, 340, 370, 410, 440) dont la superficie de la section transversale diminue lorsque l'on s'éloigne d'une entrée (207, 237, 267, 307, 437), caractérisé en ce que le boîtier (203, 233, 263, 293, 303, 363, 403, 433) présente une première paroi d'extrémité (205, 235, 265, 305, 435) dotée de l'entrée (207, 237, 267, 437) et une deuxième paroi d'extrémité (206, 236, 266, 306, 436) dotée d'une sortie (208, 238, 268, 438), en ce que l'entrée (207, 237, 267, 307, 437) présente un espace interne traversant la première paroi d'extrémité (205, 235, 265, 305, 435), débouchant dans une embouchure pratiquée dans l'espace vide interne (221, 251, 281, 321, 381, 421, 451), et qui à son embouchure présente un section transversale de forme et de dimensions essentiellement identiques à celles de l'espace vide interne (221, 251, 281, 321, 351, 381, 421, 451), en ce que chaque corps de catalyse (211, 241, 271, 311, 371, 411, 441, 471) présente une garniture constituée d'éléments de tôle (213, 214, 443, 473, 474), en ce qu'au moins un élément de tôle (213, 443, 473) de chaque paire d'éléments de tôle voisins l'un de l'autre (213, 214, 443, 473, 474) présente des saillies, et en ce que les éléments de tôle (213, 214, 443, 473, 474) appartenant à la même garniture définissent des plans osculateurs parallèles les uns aux autres en osculation avec ces éléments de tôle.

2. Pot catalytique selon la revendication 1, caractérisé en ce que l'espace interne de l'entrée (207, 237, 267, 437) présente une partie qui s'étend jusqu'à ladite embouchure et qui forme celle-ci, dont la section transversale présente surface croissante ou constante lorsque l'on s'approche de l'embouchure.

3. Pot catalytique selon l'une des revendications 1 ou 2, caractérisé en ce que chaque garniture présente en succession alternée des premiers éléments de tôle (213, 443, 473) présentant des saillies et des deuxième éléments de tôle (214, 474) plans, en ce que les saillies sont formées par des ondulations (213b) et en ce que les ondulations (213b) appartenant à un même élément de tôle (213, 443) sont parallèles les unes aux autres.

4. Pot catalytique selon la revendication 3, caractérisé en ce que les éléments de tôle (213, 214, 443, 473, 474) voisins l'un de l'autre, appartenant à la même garniture, se touchent par les crêtes des ondulations (213b).

5. Pot catalytique selon l'une des revendications 1 à 4, caractérisé en ce que chaque élément de tôle (213, 214, 443, 473, 474) présente deux bords rectilignes, parallèles l'un à l'autre dans une projection perpendiculaire à un plan osculateur en osculation avec l'élément de tôle (213, 214, 443, 473, 474) concerné.

6. Pot catalytique selon la revendication 5, caractérisé en ce que chaque élément de tôle (213, 214, 443, 473, 474) présente dans ladite projection une forme rectangulaire, et présente encore deux autres bords rectiligne parallèles l'un à l'autre.

7. Pot catalytique selon l'une des revendications 1 à 6, caractérisé en ce que les différents corps de catalyse (271, 311, 371, 411, 441) présentent des surfaces internes (271d, 311d, 371d, 411d, 441d) adjacentes à l'espace vide interne (281, 321, 381, 421, 451), qui, en section transversale, enferment ensemble l'espace vide interne (281, 321, 381, 421, 451) essentiellement complètement et sans discontinuité.

8. Pot catalytique selon l'une des revendications 1 à 7, caractérisé en ce que chaque corps de catalyse (211, 241, 271, 311, 371, 411, 441, 471) présente une surface externe (211c, 241c, 271c, 311c, 371c, 411c, 441c) adjacente à l'espace vide externe (222, 252, 282, 322, 382, 422, 452), en ce que les passages (217, 247, 277, 317, 377, 417, 447, 477) présentent des embouchures situées dans la surface externe (211c, 241c, 271c, 311c, 371c, 411c, 441c), et en ce qu'entre l'enveloppe (204, 234, 264, 294, 304, 364, 404, 434) et l'ensemble de la surface externe (211c, 241c, 271c, 311c, 371c, 411c, 441c), il existe des espaces intermédiaires qui appartiennent à l'espace vide externe (222, 252, 282, 322, 382, 422, 452).

9. Pot catalytique selon l'une des revendications 1 à 8, caractérisé en ce qu'entre l'enveloppe (294, 364, 434) et les moyens de catalyse (295, 370, 440), il existe un espace intermédiaire qui, en section transversale, entoure complètement ces moyens de catalyse et qui appartient à l'espace vide externe (297, 382, 452).

10. Pot catalytique selon l'une des revendications 1 à 9, caractérisé en ce que les moyens de catalyse (370, 410, 440) présentent au moins trois corps de catalyse (371, 441) adjacents à l'espace vide interne (381, 421, 451).

11. Pot catalytique selon l'une des revendications 1 à 10, caractérisé en ce qu'essentiellement tout le long de sa dimension qui s'éloigne de l'entrée (207, 237, 267, 307, 437), la superficie de la section transversale de la ou de chaque zone libre de l'espace vide interne (221, 251, 281, 321, 351, 421, 451) diminue de manière essentiellement linéaire avec la distance par rapport à l'entrée (207, 237, 267, 307, 437).

12. Pot catalytique selon l'une des revendications 1 à 11, caractérisé en ce que l'espace interne de l'entrée (207, 237) et l'espace vide interne (221, 251), au droit de l'embouchure, débouchant dans ce dernier, de l'espace interne de l'entrée (207, 237), présentent en section transversale la forme d'un polygone, et en ce que l'entrée (207, 237) présente une partie dont la section transversale présente la forme d'un cercle, par exemple une partie cylindrique, et une partie qui relie celle-ci à l'embouchure de forme polygonale.

13. Pot catalytique selon la revendication 12, caractérisé en ce que chaque garniture constituée d'éléments de tôle (213, 214) présente une surface interne plane (211d, 241d) adjacente à l'espace vide interne (221, 251) et une surface externe plane (211c, 241c) parallèle à la surface interne, et en ce que l'embouchure de l'entrée (207, 237) présente la forme d'un quadrilatère.

14. Pot catalytique selon l'une des revendications 1 à 11, caractérisé en ce que l'espace interne de l'entrée (267, 307, 437) et l'espace vide interne (281, 321, 381, 421, 451), au droit de l'embouchure de l'entrée (267, 307, 437) débouchant dans cet espace vide interne, présentent en section transversale la forme d'un cercle.

15. Pot catalytique selon l'une des revendications 1 à 14, caractérisé en ce que les différentes garnitures présentent des surfaces internes (211d, 271d, 441d) adjacentes à l'espace vide interne (221, 281, 451), qui se rapprochent les unes des autres dans la direction qui s'éloigne de l'entrée (207, 267, 437).

16. Pot catalytique selon l'une des revendications 1 à 14, caractérisé en ce que les moyens de catalyse (240, 310, 370, 410) définissent un axe (232, 302, 362, 402), en ce que les garnitures présentent des surfaces internes (241d, 311d, 371d, 411d) parallèles aux garnitures et adjacentes à l'espace vide interne (251, 321, 381, 421), en ce que dans l'espace vide interne (251, 321, 381, 421) est disposé d'un élément de délimitation (250, 320, 382, 420) qui, ensemble avec les surfaces internes (241d, 311d, 371d, 411d) situées face à lui, délimite au moins une région libre de l'espace vide interne (251, 321, 381, 421), et en ce que l' élément de délimitation (250, 320, 380, 420) se rapprochent de la surface interne (241d, 311d, 371d, 411d) lorsqu'on s'éloigne de l'entrée (237, 307).

17. Pot catalytique selon l'une des revendications 1 à 16, caractérisé en ce que l'entrée (437) présente un raccord rigide et relié de manière étanche à la première paroi d'extrémité (435), qui s'avance dans un espace interne entouré par le boîtier (433), et en ce que les moyens de catalyse (440) sont fixés sur le raccord et sont partout écartés de la paroi du boîtier (433).

18. Pot catalytique selon l'une des revendications 1 caractérisé en ce que les moyens de catalyse (210, 240, 270, 295, 310, 370, 410) se raccordent à la première paroi d'extrémité (205, 235, 265, 305) et sont reliés à cette dernière de manière fixe et étanche.

19. Pot catalytique selon l'une des revendications 1 à 18, caractérisé en ce que les éléments de tôle (213, 214, 443, 473, 474) présentent des revêtements en matériau à action catalytique, et en ce que chaque élément de tôle (213, 214, 443, 473, 474) présente au moins une partie plane de retenue (213e, 213f, 214e, 214f, 473e) disposée contre une partie plane de retenue (213e, 213f, 214e, 214f, 473e) d'un autre élément de tôle (213, 214, 443, 473, 474) et/ou contre un élément (215, 475) des moyens de retenue, et en ce que les parties de retenue (213e, 213f, 214e, 214f, 473e) et les éléments (215, 475) disposés les uns contre les autres sont reliés rigidement les uns aux autres.
